(19) Europäisches Patentamt
European Patent Office
Office européen des brevets

(11) **EP 3 800 621 A1**

(12) **DEMANDE DE BREVET EUROPEEN**

(43) Date de publication:
**07.04.2021 Bulletin 2021/14**

(51) Int Cl.:
***G08B 7/06*** *(2006.01)*  ***G08B 29/18*** *(2006.01)*

(21) Numéro de dépôt: **19306270.0**

(22) Date de dépôt: **02.10.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeurs:
- **Université de Marne La Vallee**
  **77420 Champs Sur Marne (FR)**
- **Centre National de la Recherche Scientifique**
  **75016 Paris (FR)**
- **Ecole Nationale des Ponts et Chaussées**
  **77420 Champs-sur-Marne (FR)**

- **Université Paris-Est Créteil Val de Marne**
  **94000 Créteil (FR)**
- **Esiee Paris - Chambre de Commerce et d'Industrie**
  **de Region Paris Ile de France**
  **93162 Noisy-le-Grand (FR)**

(72) Inventeurs:
- **RACHEDI, Abderrezak**
  **77100 MEAUX (FR)**
- **MEBARKI, Ahmed**
  **77454 Marne-la-Vallée Cedex 2 (FR)**

(74) Mandataire: **A.P.I. Conseil**
**Immeuble Newton**
**4, rue Jules Ferry**
**64000 Pau (FR)**

(54) **PROCEDE ET DISPOSITIF DE GUIDAGE PAR OBJET CONNECTE DANS UN BATIMENT**

(57)     La présente invention concerne un procédé de localisation et de guidage adaptés, en fonction d'un évènement, dans un bâtiment, des déplacements d'utilisateurs suivant des chemins menant vers un ou plusieurs lieux cibles donnés, avec des objets connectés (T, T') en liaison de communication avec un serveur des ressources à distance qui est un serveur de contrôle (S) accessible par un réseau de communication, comprenant les étapes suivantes: à partir d'une maquette numérique du bâtiment (BIM, CIM), on calcule des nœuds (N) et des arêtes (A) ; on assigne, à chaque nœud de passage, une liste d'attente d'utilisateurs; on calcule automatiquement un graphe orienté acyclique (DAG) de déplacement vers les lieux cibles ("E", "S", "W"), avec les nœuds et les arêtes (A) ; on détecte la localisation réelle d'un événement; on calcule la position réelle de chaque utilisateur situé dans le bâtiment ; en fonction du profil de l'utilisateur, de sa localisation en temps réel dans le bâtiment qui entrainent l'inaccessibilité de certains nœuds du graphe orienté acyclique (DAG), on calcule le graphe orienté acyclique dit 'actualisé' (DAG') de déplacement vers les lieux cibles; et un sous-graphe DODAG'.

FIG. 1

**Description**

**DOMAINE DE L'INVENTION**

La présente invention concerne un procédé de localisation d'utilisateurs, et de guidage, en fonction d'un événement, dans un bâtiment, des déplacements des utilisateurs suivant des chemins menant vers un ou plusieurs lieux cibles donnés, le guidage étant adapté à chaque utilisateur.

**ETAT DE LA TECHNIQUE**

Face aux risques naturels et technologiques, la sécurité des personnes constitue un important enjeu : à titre d'exemple, cas des incendies pour le cas des IGH (immeubles de grande hauteur; par exemple, 2635 décès causés par les incendies aux USA en 2015) et des transports souterrains (métro).

Les modèles d'évacuation des foules sont largement abordés par la recherche.

Les simulations sont cependant orientées vers la partie pré-désastre pour dimensionner les chemins et les issues de sortie (emplacements, largeurs, etc..): cas du stade olympique de Pékin qui devait être évacué en 8 min en cas d'alerte.

Malgré la diversité des systèmes d'alerte actuels (systèmes sonores, systèmes d'affichage...), ces solutions ne sont pas toujours en mesure de fournir des instructions d'évacuation simples et efficaces (alerte en temps réel, itinéraire d'évacuation, mise à jour de l'itinéraire selon évènements en temps réel, etc.).

Les principales raisons de ces limites sont :

- un manque de flexibilité : les notifications d'évacuation suivent généralement des plans d'évacuation prédéfinis, peu importe le type et le degré de menace ou danger. Cela peut conduire les gens dans des impasses (plafonds effondrés, escaliers détruits, sorties bloquées, etc.) ou engendrer des problèmes plus graves (conduire à des espaces avec des fuites de gaz et des explosions possibles).
- un manque de « discernement » et une panique : en situation de danger, les personnes se précipitent vers les mêmes sorties, ce qui entraîne une congestion au niveau de ces dernières, et ainsi un retard considérable lors de l'évacuation outre les chocs et bousculades.
- des instructions et informations insuffisantes : pour les personnes qui ne sont pas familières avec le bâtiment, les instructions d'évacuation peuvent ne pas être utiles, voire inutiles.

Certaines catastrophes graves (panne de courant, incendie, etc.) qui réduisent la visibilité peuvent aggraver la situation.

Il s'agit alors de mettre en place une nouvelle stratégie de résolution de la problématique, en plaçant l'utilisateur comme point central, afin de lui offrir les informations nécessaires et pertinentes au moment opportun pour mieux réagir à l'incident.

**EXPOSE DE L'INVENTION**

L'invention utilise la tendance actuelle à l'usage des technologies de la communication, notamment l'Internet des objets et des maquettes digitales BIM qui ont suscité l'idée d'extraire les chemins possibles pour l'évacuation dans le bâtiment notamment.

L'invention permet un procédé de guidage individualisé, en fonction d'un événement, dans un bâtiment qui présente des espaces fermés et/ou des espaces ouverts délimités par des obstacles, des déplacements d'utilisateurs suivant des chemins menant vers plusieurs lieux cibles donnés, avec des objets connectés en liaison de communication avec un serveur des ressources à distance qui est un serveur de contrôle accessible par un réseau communication , par exemple de type « Cloud Computing »,

comprenant les étapes suivantes:

    i- à partir d'une maquette numérique du bâtiment (BIM, CIM),

- on définit et on calcule des noeuds,
  les noeuds se répartissant entre :

  • des noeuds dispatcheur ;
  • des noeuds de passage, les noeuds de passage étant des points du chemin devant être empruntés par les utilisateurs pour se déplacer vers les divers lieux cibles donnés ;

- on définit et on calcule des arêtes,
  chaque arête reliant deux noeuds successifs en traversant les espaces sans rencontrer les obstacles et sans perte de visibilité entre deux noeuds successifs ;

- on assigne, à chaque noeud de passage, une liste d'attente d'utilisateurs;

- on calcule automatiquement un graphe orienté acyclique (en anglais «Directed Acyclic Graph ou DAG ») de déplacement vers les lieux cibles, constitué avec :

    • les noeuds
    • les arêtes,

ii- on détecte la localisation réelle d'un événement dans le bâtiment et on détermine la nature de l'évènement, que l'on stocke sur le serveur de contrôle ;

iii- on calcule la position réelle de chaque utilisateur situé dans le bâtiment, avec la mesure de la puissance du signal de réception de l'objet connecté donné de l'utilisateur, réalisée par :

    • pour les espaces fermés, une liaison de communication sans fil à des bornes d'accès de communication en liaison de communication avec le serveur de contrôle et/ou

    • pour les espaces ouverts, une liaison de communication sans fil ou cellulaire avec le serveur de contrôle ;

iv- en fonction de la nature de l'évènement qui entraine l'inaccessibilité de certains noeuds du graphe orienté acyclique (DAG), on calcule le graphe orienté acyclique dit 'actualisé' (DAG') de déplacement vers les lieux cibles;

v- on transpose les positions réelles des utilisateurs dans la maquette numérique et on calcule le noeud dispatcheur Nd associé à chaque utilisateur et situé le plus près de l'utilisateur;

vi- à partir de chaque noeud du graphe orienté acyclique actualisé, on calcule pour chaque utilisateur un sous-graphe DODAG' (en anglais « Destination Oriented Directed Acyclic Graph ») qui correspond au chemin personnalisé à chaque utilisateur vers un lieu cible donné,

vii- on guide via l'objet connecté de l'utilisateur ou des objets connectés du bâtiment, par interfaces/signaux personnalisés, chaque utilisateur à suivre le sous-graphe DODAG' associé, vers un lieu cible donné, et on réitère les étapes précédentes ii à vi, pour actualiser le guidage, à une fréquence donnée et adaptée à l'événement.

Avantageusement, le calcul pour chaque utilisateur du sous-graphe DODAG' est réalisé à l'aide :

- d'une «fonction objectif individuelle» pour chaque noeud dispatcheur (Nd), basée sur les profils des utilisateurs, et qui présente comme paramètres d'entrée le temps et/ou la distance de parcours des utilisateurs vers le ou les lieux cibles ("E", "S", "W"), pour :

    • attribuer à chaque utilisateur tous ses noeuds de passage associés au noeud dispatcheur (Nd), à proximité duquel se trouve chaque utilisateur,
    • constituer les listes d'attente de chaque noeud de passage (N) associé au noeud dispatcheur (Nd),
    • constituer les listes d'attente de chaque noeud de passage (N) de l'ensemble des espaces fermés et/ou ouverts,

- d'une «fonction objectif générale» à partir des «fonctions objectif individuelles», qui présente comme paramètre d'entrée l'état des listes d'attente de l'ensemble des noeuds de passage (N) de l'ensemble des utilisateurs dans l'ensemble des espaces fermés et/ou ouverts,
  pour optimiser les listes d'attente de l'ensemble des noeuds de passage (N), afin de limiter le temps ou la distance de parcours de l'ensemble des utilisateurs vers le ou les lieux cibles.

## DESCRIPTION DES FIGURES

D'autres objectifs, caractéristiques et avantages sortiront de la description détaillée qui suit en référence aux dessins donnés à titre illustratif et non limitatif parmi lesquels :

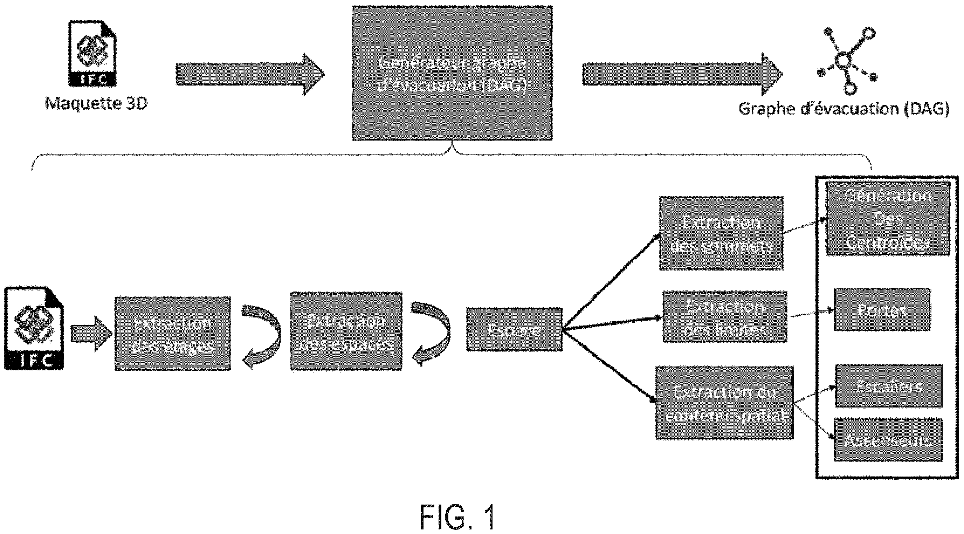

- la figure 1 représente un processus de calcul du DAG à partir d'une maquette numérique BIM (fichier IFC en anglais « Industry Foundation Classe ») ;

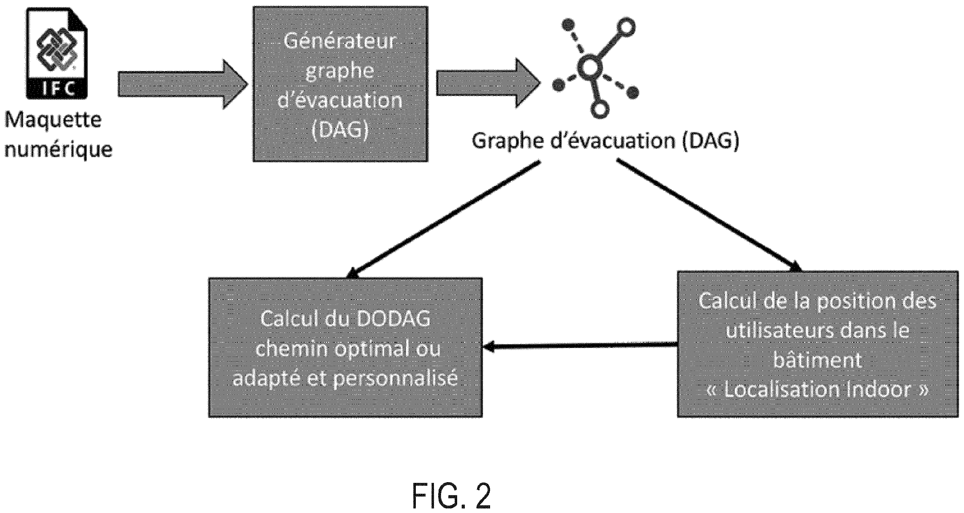

- la figure 2 représente Interaction entre le processus de calcul du DAG et les processus de localisation et du calcul du DODAG' ;

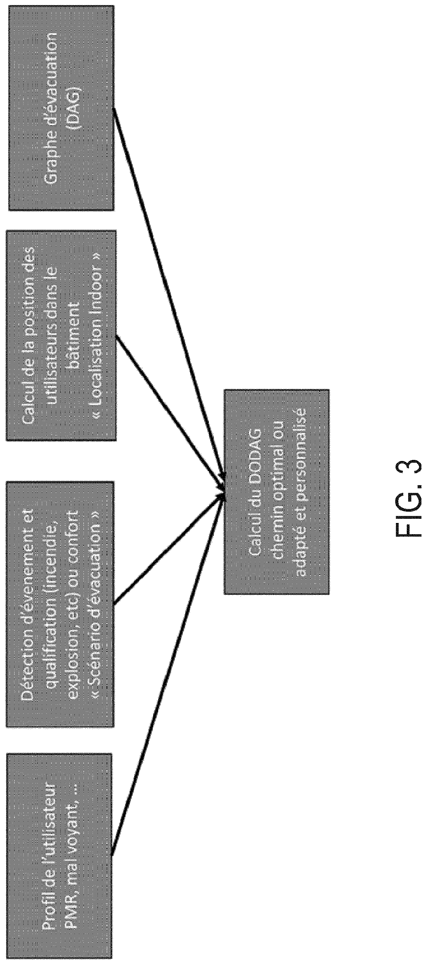

- la figure 3 représente le processus de calcul du DODAG' (à vide), chemin optimal ou adapté et personnalisé ;

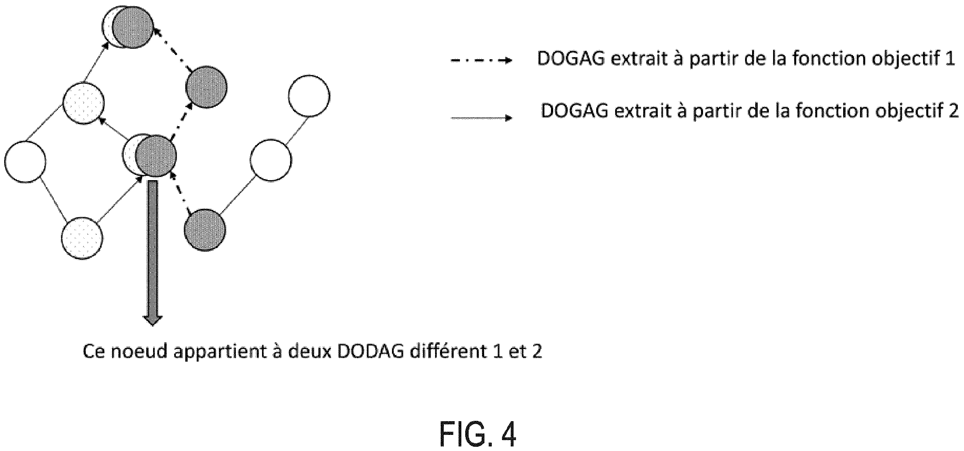

- la figure 4 représente le calcul du DODAG' chemin optimal ou adapté et personnalisé une vue en coupe;

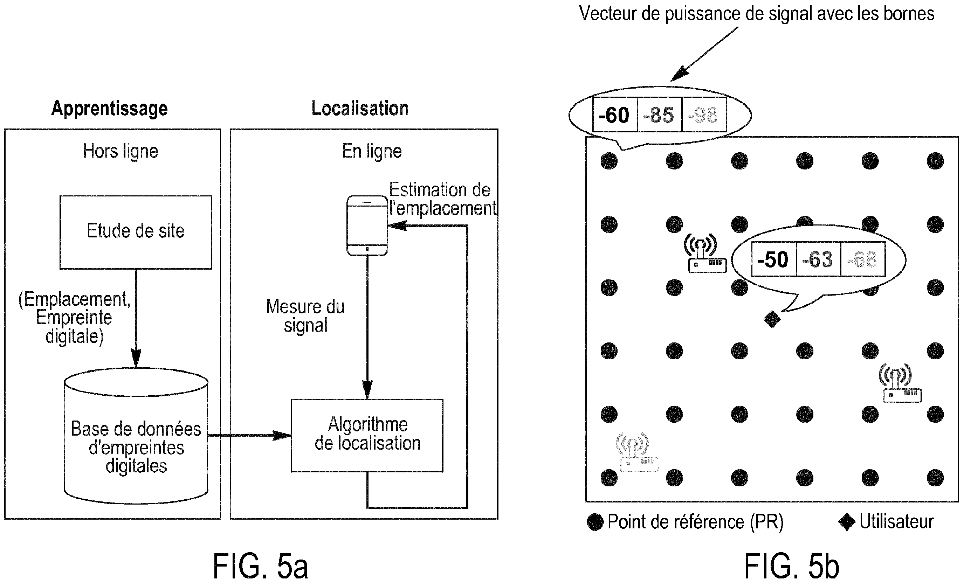

- la figure 5 représente le processus de calcul de la position des utilisateurs dans le bâtiment, en anglais « Localisation Indoor » ;

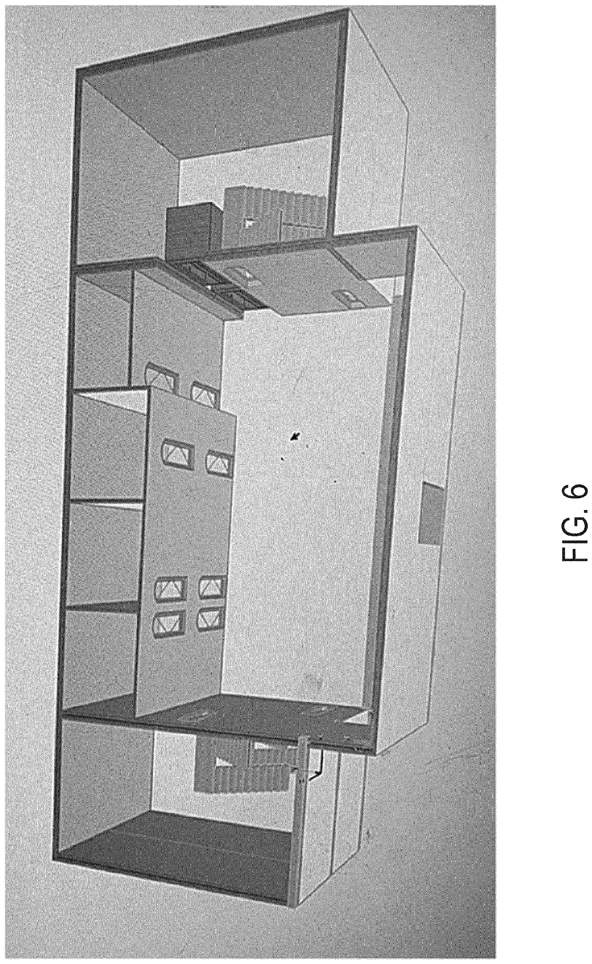

- la figure 6 représente un exemple de réalisation de l'invention;

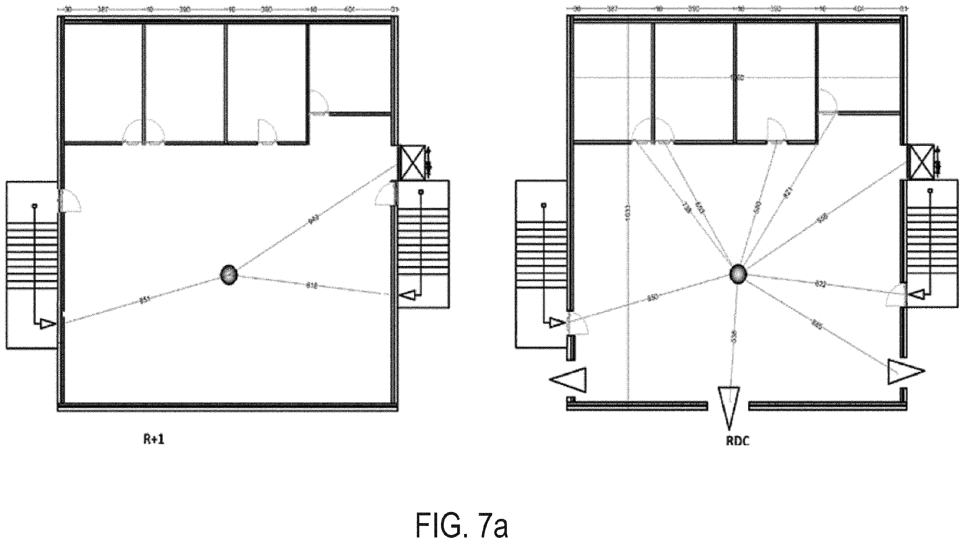

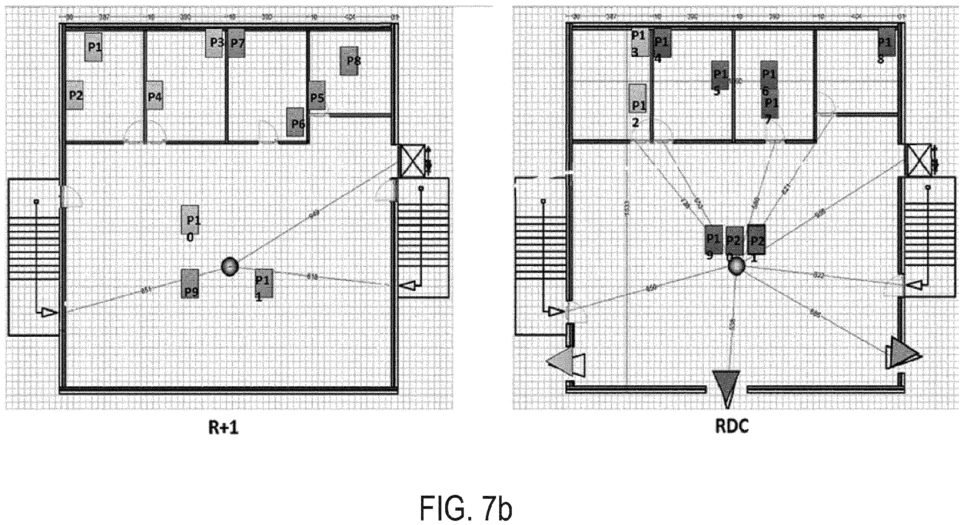

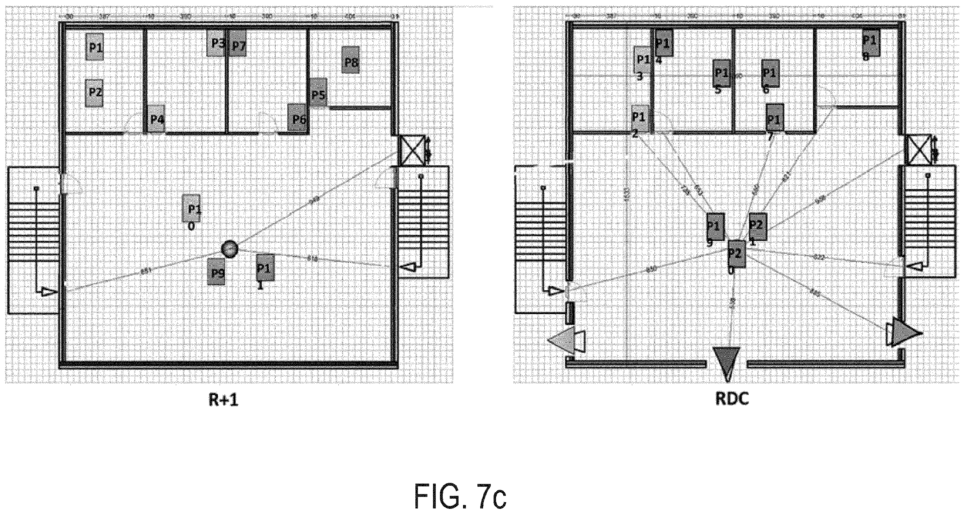

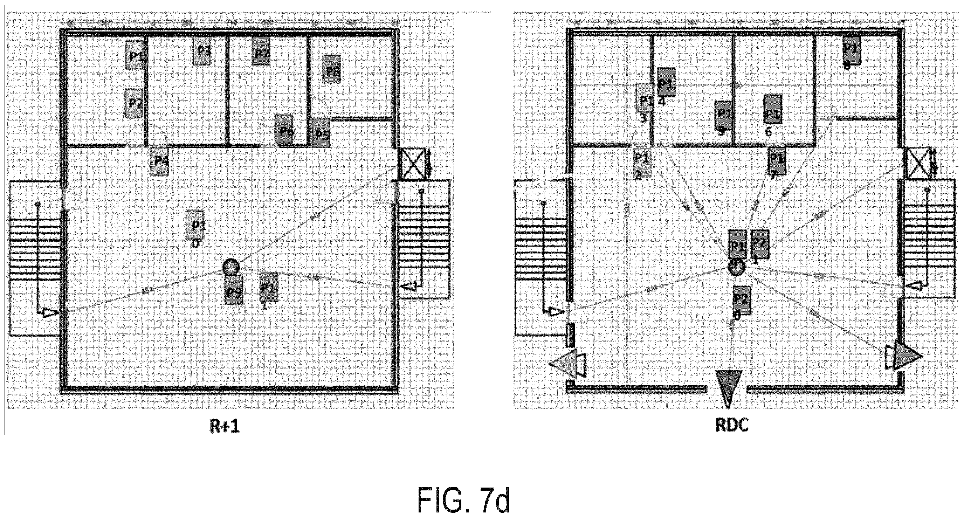

- les figures 7a, 7b, 7c, 7d représentent le déplacement des individus sur les deux étages ;

- la figure 8 représente une perspective du bâtiment : vue depuis le côté Sud ;

- la figure 9 représente une vue de l'étage "R1" : observateur situé côté Sud ;

- la figure 10 représente une vue de l'étage "Rdc" : observateur situé côté Sud ;

- la figure 11 représente un niveau "Rdc" : hall et portes de sortie : observateur à l'Est ;

- la figure 12 représente une vue des portes d'accès de l'étage "R1" au rez-de-chaussée "Rdc" ;

- la figure 13 représente un niveau "R1 : salles, hall, escaliers, ascenseur et corridors ;

- la figure 14 représente un ascenseur et escalier "Est" : observateur situé côté "Nord-Est" ;

- la figure 15 représente un escalier "Ouest" : observateur situé côté "Nord-Ouest" ;

- la figure 16 représente un ascenseur : portes "L1" et "L0" aux niveaux "R1" et "Rdc" ;

- la figure 17 représente des noeuds : cercles "virtuels" au sol ("R1" + escaliers + ascenseur) ;

- la figure 18 représente un ensemble des noeuds : "Rdc", "R1", escaliers et ascenseurs

   (a) Noeuds dans salles, escaliers, hall, ascenseur et sorties (vue côté "Sud") ;
   (b) Vue récapitulative de tous les noeuds du bâtiment (vue côté "Sud-Est") ;

- la figure 19 représente un ensemble des arêtes : "Rdc", "R1", escaliers et ascenseurs

   (a) Arêtes : segments dans salles, escaliers, halls et ascenseur (vue côté "Nord")
   (b) Vue globale des arêtes du bâtiment (vue côté "Sud-Ouest")
   (c) Vue globale des arêtes du bâtiment (vue côté "Est") ;

- la figure 20 représente un DAG : graphe d'évacuation vers les sorties (vue du côté Sud) ;

- la figure 21 représente des usagers au niveau "R1" du bâtiment (vue du côté Ouest) ;

- la figure 22 représente des usagers au niveau "Rdc" du bâtiment (vue du côté Nord-Ouest) ;

- la figure 23 représente une liste d'attente des portes de sortie : position selon la distance la plus courte à la porte : vue depuis côté "Sud" ;

- la figure 24 représente une liste d'attente des noeuds de passage (seuil de porte) des salles "r1w", "r1m", "r1e", "t1" : vue depuis côté "Nord" ;

- la figure 25 représente une liste d'attente aux noeuds de passage (seuil de porte) des salles "R1" : vue depuis côté "Nord" ;

- la figure 26 représente une salle comportant 02 issues dénommées "1" et "2", et contenant 11 personnes "P :1" à "P :11";

- la figure 27 représente des phases intermédiaires lors de l'évacuation ;

- la figure 28 représente les derniers usagers en évacuation ;

- la figure 29 représente une salle comportant 02 issues dénommées "1" et "2", et contenant 99 personnes "P :1" à "P :99" ;

- la figure 30 représente les positions des usagers après au premier pas de temps ;

- la figure 31 représente les positions des usagers après au second pas de temps ;

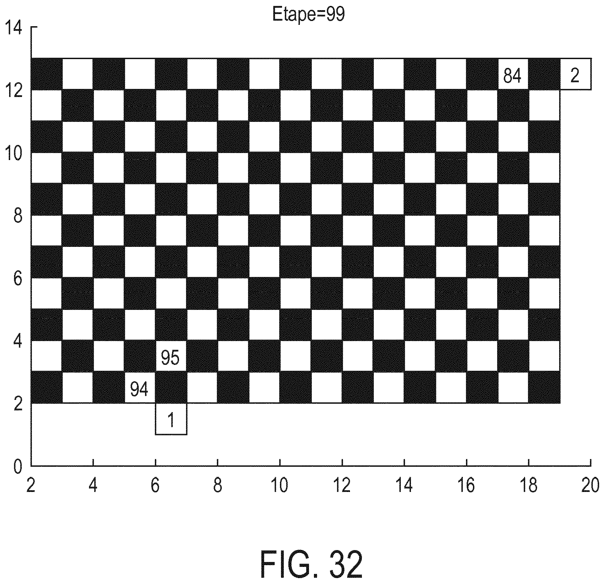

- la figure 32 représente les derniers usagers avant évacuation complète.

**DESCRIPTION DETAILLEE DE L'INVENTION**

Le système est composé d'une architecture modulaire avec trois volets:

- Acquisition des données à base d'objets connectés (Bornes d'accès, Points de références, Capteurs).
- Application mobile/web qui permet à l'utilisateur/administrateur d'interagir avec le système (envoi d'informations et de notifications).
- Services pour le traitement des données collectées, et la synchronisation de la base de données.

L'invention se décline en cinq modules complémentaires :

- Module 1: Génération/Extraction du graphe de connectivité de toute position dans la maquette BIM (en anglais « Building Information Model ») (bâtiment, infrastructures, installations sportives, etc).

- Module 2: Calcul des sous-graphes (ensemble des chemins possibles vers les diverses portes de sorties, à partir d'une position quelconque), qui sont des parties du graphe général (Module 1).

- Module 3: Détermination/Localisation de chaque utilisateur connecté et situé dans l'ensemble à évacuer. Sa position (correspondance dans la maquette BIM) par référence à des ancres dans la maquette BIM et signaux radios (objet connecté vers ancres = bornes d'accès tells bornes Wifi).

- Module 4: Détermination des trajectoires optimales pour l'individu, selon son profil, les chemins potentiels et les positions de l'ensemble des personnes à évacuer.

- Module 5: Guidage via l'objet connecté par interfaces/signaux personnalisés (image sur écran, indication sonore, vibrations directionnelles sur bracelets ou cannes, guidage par agent ou signaux lumineux, drones ou essaims de drones)

En d'autres termes, le procédé selon l'invention présente les étapes suivantes:

ii- à partir d'une maquette numérique du bâtiment (BIM, CIM),

- on définit et on calcule des noeuds,
  les noeuds se répartissant entre :

  - des noeuds dispatcheurs Nd ;
  - des noeuds de passage N, les noeuds de passage N étant des points du chemin devant être empruntés par les utilisateurs pour se déplacer vers les divers lieux cibles donnés ;

- on définit et on calcule des arêtes A,
chaque arête A reliant deux noeuds successifs en traversant les espaces sans rencontrer les obstacles et sans perte de visibilité entre deux noeuds successifs ;

- on assigne, à chaque noeud de passage, une liste d'attente d'utilisateurs;

- on calcule automatiquement un graphe orienté acyclique (DAG) de déplacement vers les lieux cibles, constitué avec :

  • les noeuds N,
  • les arêtes A,

ii- on détecte la localisation réelle d'un événement dans le bâtiment et on détermine la nature de l'évènement, que l'on stocke sur le serveur de contrôle S ;

iii- on calcule la position réelle de chaque utilisateur situé dans le bâtiment, avec la mesure de la puissance du signal de réception de l'objet connecté donné de l'utilisateur, réalisée par :

  • pour les espaces fermés, une liaison de communication sans fil à des bornes B d'accès de communication en liaison de communication avec le serveur de contrôle S et/ou
  • pour les espaces ouverts, une liaison de communication sans fil ou cellulaire avec le serveur de contrôle S ;

iv- en fonction de la nature de l'évènement qui entrainent l'inaccessibilité de certains noeuds du graphe orienté acyclique (DAG), on calcule le graphe orienté acyclique dit 'actualisé' (DAG') de déplacement vers les lieux cibles;

v- on transpose les positions réelles des utilisateurs dans la maquette numérique et on calcule le noeud dispatcheur Nd associé à chaque utilisateur et situé le plus près de l'utilisateur;

vi- à partir du graphe orienté acyclique actualisé et du noeud dispatcheur (Nd) associé à chaque utilisateur, on calcule pour chaque utilisateur un sous-graphe DODAG' qui correspond au chemin personnalisé à chaque utilisateur vers un lieu cible donné,

vii- on guide via l'objet connecté de l'utilisateur T ou des objets connectés T du bâtiment, par interfaces/signaux personnalisés, chaque utilisateur à suivre le sous-graphe DODAG' associé, vers un lieu cible donné, et on réitère les étapes précédentes ii à vi, pour actualiser le guidage, à une fréquence donnée et adaptée à l'événement.

Ainsi, au cours du guidage, l'utilisateur peut être amené à avoir un lieu cible qui change en fonction de l'évènement, et du parcours des autres utilisateurs.

Un espace fermé est un espace défini comme un espace dans lequel l'utilisateur ne peut se connecter via son objet connecté au serveur de contrôle S, uniquement par des bornes B d'accès de communication installées dans le bâtiment (connexion uniquement en local) et en liaison de communication avec le serveur de contrôle S . A l'inverse de l'espace ouvert dans lequel la connexion de l'objet connecté de l'utilisateur est possible soit par des bornes B d'accès de communication soit en cellulaire.

Les noeuds dispatcheur Nd sont des noeuds que peuvent emprunter les utilisateurs. Ils sont reliés aux noeuds de passage N (qui sont les noeuds par lesquels il faut forcément passer pour l'utilisateur pour sortir)

Dans un espace ouvert, il y a plusieurs possibilités pour localiser l'objet connecté :

1) s'il est doté de module GPS nous pouvons le localiser via le satellite ;
2) s'il est doté d'une interface de communication cellulaire (4G), nous pouvons se baser sur les relais cellulaires pour le localisé,
3) s'il est doté d'interface de communication sur une bande de fréquence ISM (non cellulaire), nous pouvons utiliser les techniques d'apprentissage basées sur la puissance du signal pour le localisé.

Les objets connectés T embarqués par les utilisateurs peuvent être utilisés soit uniquement pour calculer la position des utilisateurs (et dans ce cas il y a des objets connectés T localisés dans le bâtiment qui permettent de guider les utilisateurs), soit pour calculer la position des utilisateurs et pour guider les utilisateurs.

Avantageusement, le calcul pour chaque utilisateur du sous-graphe DODAG' est réalisé à l'aide :

- d'une «fonction objectif individuelle» pour chaque noeud dispatcheur Nd, basée sur les profils des utilisateurs, et qui présente comme paramètres d'entrée le temps et/ou la distance de parcours des utilisateurs vers le ou les lieux cibles ("E", "S", "W"), pour :

  • attribuer à chaque utilisateur tous ses noeuds de passage N associés au noeud dispatcheur Nd, à proximité duquel se trouve chaque utilisateur,
  • constituer les listes d'attente de chaque noeud de passage N associé au noeud dispatcheur Nd,
  • constituer les listes d'attente de chaque noeud de passage N de l'ensemble des espaces fermés et/ou ouverts,

- d'une «fonction objectif générale» à partir des «fonctions objectif individuelles», qui présente comme en entrée l'état des listes d'attente de l'ensemble des noeuds de passage N de l'ensemble des utilisateurs dans l'ensemble des espaces fermés et/ou ouverts,
  pour optimiser en sortie , dans le temps, les listes d'attente de l'ensemble des noeuds de passage N, afin de limiter le temps ou la distance de parcours de l'ensemble des utilisateurs vers le ou les lieux cibles.

En d'autres termes, avantageusement, la «fonction objectif générale» délivre en sortie tous les sous-graphes (DODAG') des utilisateurs, calculés pour réduire le temps et/ou distance de parcours de tous les utilisateurs, en tenant compte de chacun de leur profil et de leur localisation dans le bâtiment.

En d'autres termes, la «fonction objectif générale» délivre des listes d'attente de l'ensemble des noeuds, variant dans le temps et qui sont temporellement optimisées (ici les plus petites possibles à chaque étape de déplacement de l'ensemble des utilisateurs entre deux noeuds voisins) en tenant compte de chaque profil et de leur localisation dans le bâtiment (pour n'autoriser que certains déplacements ou des distances de déplacements spécifiques pour des utilisateurs donnés).

Avantageusement, la «fonction objectif individuelle» pour chaque noeud dispatcheur Nd, est choisie parmi les listes suivantes :

- linéaire (max) ;

- « MRHOF » (en anglais « Minimum Rank with Hysteresis Objective Function ») ; fonction objective du rang minimum avec Hystérésis.
  Cette fonction est standardisée par l'IETF (acronyme anglais « Internet Engineering Task Force ») sous forme d'une RFC (acronyme anglais « Request For Comments ») numéro : 6719 ; une référence de publication est : Omprakash Gnawali and Philip Levis. The Minimum Rank with Hysteresis Objective Function. RFC 6719. RFC Editor, 2012.
  -« ETX Objective Function » ; elle est utilisée dans le contexte de transmission réseau qui se base sur le nombre de paquet transmet et reçu (elle mesure la fiabilité d'un lien de communication). Dans notre cas, elle mesure la fiabilité d'un chemin en termes de flux ; la référence de publication est : Omprakash Gnawali and Philip Levis. The ETX Objective Function for RPL, draft-gnawali-roll-etxof-00, IETF, 2010 ;

- stratégie min max ; c'est la stratégie qui consiste à minimiser la perte maximum (c'est-à-dire dans le pire scénario). Cette stratégie est très connue dans les problèmes d'optimisation et de recherche opérationnelle ; une référence possible est :
  C. Jorgensen and S. Powell, Solving 0-1 Minimax Problems, in The Journal of the Operational Research Society Vol. 38, No. 6 (Jun., 1987), pp. 515-522

La «fonction objectif individuelle» peut aussi être une logique floue.

Avec une fonction objectif individualisée, au « niveau Noeud dispatcheur Nd (vertex : $V_j$, j étant l'indice du noeud)»,

$$S_j = \sum_{i=0}^{k} \alpha_i \cdot \left( \frac{m_i}{\gamma_i} \right)$$

,

$$\alpha_i = \begin{cases} 0 & \text{if } m_i < m_i^{lo} \\ 1 & \text{if } m_i^{lo} \leq m_i \leq m_i^{hi} \\ +\infty & \text{if } m_i^{hi} < m_i \end{cases}$$

où $\alpha$= valeur d'appartenance                                                                     et

le vecteur poids relatifs pour normalisation $\Gamma = [\gamma_0, \gamma_1, ..., \gamma_k]$, avec les intervalles de valeurs des paramètres :

- $m_i^{min}$ la plus petite valeur possible de $m_i$,
- $m_i^{lo}$ la limite inférieure pour commencer à considérer $m_i$,
- $m_i^{hi}$ la limite supérieure avant de considérer seulement $m_i$,
- $m_i^{max}$ la valeur maximale possible de $m_i$,

et l'optimum sous contraintes par la «fonction objectif générale» correspondant à toute l'arborescence

$$P_\zeta(V_j) = \min_{\zeta \in Z}(S_\zeta)$$

, à partir des fonctions sur chaque Noeud dispatcheur Nd « vertex : $V_j$ ».

Avantageusement, le profil des utilisateurs peut comporter les informations suivantes, en vue de calculer le DODAG' personnalisé:

- Personne à Mobilité Réduite ;
- l'âge de l'utilisateur;
- présence d'autres utilisateurs spécifiques (donnés ou faisant partie de sa famille) ;
- profils différenciés (non voyant ; non entendant ; claustrophobes).

L'événement peut être:

- une urgence (sécurité des personnes, colis piégé, Feu/incendie, explosion, écroulement d'une partie d'un ouvrage, obstacle, situation menaçante, zone d'exclusion, etc..), et le procédé permet d'évacuer les personnes vers les lieux cibles qui sont des sorties, ou

- dit normal (recherche de confort ou acheminement vers des points d'intérêt, par exemple des magasins, centres culturels, installations sportives, gares, aéroports,..., fluidifier les files d'attente, guider les livreurs vers les points de livraison/clients, ou des emplacements cibles tels lieux de spectacle..) et le procédé permet d'acheminer les utilisateurs vers les lieux cibles.

Avantageusement dans l'étape ii, on détermine la nature de l'événement et sa localisation réelle dans le bâtiment :

a) automatiquement par des algorithmes et/ou
b) manuellement par entrée d'informations des utilisateurs qui sont envoyées au serveur de contrôle S, afin de déterminer dans le graphe d'évacuation les noeuds les plus proches de l'évènement.

Il y a plusieurs techniques de détection des anomalies à partir par exemple de la vidéo surveillance.
Deux approches les plus utilisées sont :

1) basées sur l'analyse des trajectoires,
2) basées sur analyse des Pixels.

Voici des exemples de références:

- Wang, A. Klaser, C. Schmid, and C.-L. Liu, "Action recognition by dense trajectories," in Computer Vision and Pattern Recognition (CVPR), 2011 IEEE Conference on, June 2011, pp. 3169-3176.

- S. Cosar, G. Donatiello, V. Bogorny, C. Garate, L. Alvares, F. Bremond. Towards Abnormal Trajectory and Event Détection in Video Surveillance. IEEE Transactions on Circuits and Systems for Video Technology, 2016.

Pour les algorithmes de détection des incendies, on peut considérer les références suivantes :

1- A partir des images/vidéo : [ref3] E. Cetin, K. Dimitropoulos, B. Gouverneur, N. Grammalidis, O. Gunay, Y. H. Habiboglu, B. U. Toreyin, and S. Verstockt, "Video fire detection: a review,"Digital Signal Processing, vol. 23, no. 6, pp. 1827- 1843, 2013.

2- A partir des capteurs C renifleurs : J. Fonollosa, A. Solorzano, S. Marco, Chemical Sensor Systems and Associated Algorithms for Fire Detection: A Review, Sensors, Volume: 18, 2018.

Les capteurs C de détection de l'évènement utilisables peuvent être de divers types: caméra, capteur renifleur, ou l'objet connecté lui-même.

Il s'agit donc de l'ensemble des capteurs C physiques (comme de détection des feux, des gaz toxiques, etc...), mais aussi des capteurs C virtuels qui sont des algorithmes de fusion et d'analyse de données (scalaires ou multimédia). Par exemple, détection de singularité à partir d'une analyse d'image ou de vidéo. Souvent on fait appel à des techniques d'apprentissage et d'Intelligence artificielle

Dans une réalisation le bâtiment présente plusieurs étages, et dans l'étape vi on calcule, à partir de chaque noeud de passage, un sous-graphe DODAG' dans tous les étages connectés entre eux via les noeuds de passage inter-étages (escaliers, rampes, escalators, ascenseurs...) qui est extrait du graphe DAG global pour traiter toute position dans le bâtiment.

Avantageusement, dans l'étape ii, dans une étape d'apprentissage, on a mesuré la puissance du signal de réception de l'objet connecté situé à des positions connues dans le bâtiment en fonction des bornes B de communication sans fil et on a déterminé la relation puissance du signal de réception et position dans le bâtiment, par exemple avec un algorithme KNN.

Avantageusement, les interfaces/signaux personnalisés de l'étape vii sont :

- des images sur écran,
- par réalité virtuelle et augmentée (RVA),
- indication sonore, vibrations directionnelles sur bracelets ou cannes, guidage par agent ou signaux lumineux, drones ou essaims de drones

La présente invention concerne aussi le dispositif de localisation individualisée et de guidage D, en fonction d'un événement, des déplacements d'utilisateurs, dans un bâtiment qui présente des espaces fermés et/ou des espaces ouverts délimités par des obstacles, suivant des chemins menant vers plusieurs lieux cibles donnés.

Ce dispositif présente :

- un serveur des ressources à distance qui est un serveur de contrôle S accessible par un réseau de type « Cloud Computing » ;

- des capteurs C pour détecter un événement automatiquement, semi-automatiquement ou manuellement, et sa localisation réelle dans le bâtiment, que l'on stocke sur le serveur de contrôle S ;

- des moyens de calcul M reliés au serveur de contrôle S et aux capteurs C.

Ces moyens de calcul M permettent dans une première étape :

i- à partir d'une maquette numérique du bâtiment (BIM, CIM),

- de calculer des noeuds N se répartissant entre :

  • des noeuds dispatcheurs Nd (cas de points centroïdes dans un espace tel salle, hall, couloir...);
  • des noeuds de passage (cas de portes, entrées et sorties d'ascenseur, points hauts et bas de rampes ou d'escaliers...), les noeuds de passage étant des points du chemin devant être empruntés par les utilisateurs pour se déplacer vers les divers lieux cibles donnés "E", "S", "W" ;

- calculer des arêtes A, chaque arête reliant deux noeuds successifs en traversant les espaces sans rencontrer les obstacles et sans perte de visibilité entre deux noeuds successifs.

- assigner, à chaque noeud de passage, une liste d'attente d'utilisateurs;

- calculer automatiquement un graphe orienté acyclique DAG (en anglais « Directed Acyclic Graph ») de déplacement vers les lieux cibles constitué avec :

   • les noeuds N

   • les arêtes A.

Ensuite, ces moyens de calcul M permettent dans une seconde et troisième étapes :

ii+iii- de calculer la position réelle de chaque utilisateur situé dans le bâtiment, avec la mesure de la puissance du signal de réception de l'objet connecté donné de l'utilisateur, réalisée par :

   • pour les espaces fermés, une liaison de communication sans fil à des bornes B d'accès de communication en liaison de communication avec le serveur de contrôle S, les bornes B d'accès ayant une position identifiée dans la maquette numérique (BIM, CIM) et servant de points d'ancrage ou ancres ; et/ou
   • pour les espaces ouverts, une liaison de communication sans fil ou cellulaire avec le serveur de contrôle S ;

Ensuite, ces moyens de calcul M permettent dans une quatrième et cinquième étapes:

iv- de calculer le graphe orienté acyclique dit 'actualisé' (DAG') de déplacement vers les lieux cibles en fonction de la nature de l'évènement qui entrainent l'inaccessibilité de certains noeuds du graphe orienté acyclique (DAG) ;

v- de transposer les positions réelles des utilisateurs dans la maquette numérique et calculent le noeud dispatcheur Nd associé à chaque utilisateur et situé le plus près de la position réelle de l'utilisateur;

Ces moyens de calcul M permettent dans une sixième étape :

vi- à partir de chaque noeud du graphe orienté acyclique actualisé, de calculer pour chaque utilisateur, un sous-graphe DODAG' (en anglais « Destination Oriented Directed Acyclic Graph ») qui correspond au chemin personnalisé à chaque utilisateur vers un lieu cible donné "E", "S", "W".

Enfin, ces moyens de calcul M permettent dans une septième étape :

vii- de réitérer les étapes suivantes ii à vi, pour actualiser le guidage, à une fréquence donnée et adaptée à l'évènement, des objets connectés T en liaison de communication avec le serveur de contrôle S par les bornes B de communication, et qui guident via l'objet connecté de l'utilisateur ou des objets connectés T du bâtiment, par interfaces/signaux personnalisés, chaque utilisateur à suivre le sous-graphe DODAG' associé, vers un lieu cible donné.

Avantageusement, ces moyens de calcul M calculent le sous-graphe DODAG', à l'aide :

• d'une «fonction objectif individuelle» telle que définie ci-avant,

• d'une «fonction objectif générale» telle que définie ci-avant, pour optimiser les listes d'attente de l'ensemble des noeuds de passage.

Les noeuds dispatcheurs Nd peuvent être des points centroïdes dans un espace tel salle, hall, couloir...).
Les noeuds de passage peuvent être des portes, entrées et sorties d'ascenseur, points hauts et bas de rampes ou d'escaliers...).
Les objets connectés T peuvent être choisis parmi la liste suivante :

- Smartphone,
- Canne connectée (avec dispositif de vibration),
- Fauteuil roulant connecté,
- Tablette,
- Ecran connecté,
- Lunette connectée (lunette de RV/RA),
- Bracelet connecté (avec dispositif de vibration, et écran),
- Capteur connecté lumineux,

- Dispositifs de communication pour les agents de sécurité/d'évacuation,
- Robot connecté (doté d'un écran pour le guidage visuel ou vocal),
- Drone connecté (doté d'un écran pour le guidage visuel ou vocal),

Les objets connectés T peuvent être reliés au serveur de contrôle S avec deux modes possibles différenciés : « mode individuel » ou « mode groupe ».

Les bornes B de communication sans fil peuvent être fixes et/ou mobiles (sur des drones, des utilisateurs avec des renifleurs ou des utilisateurs agents et assistants d'évacuation).

Les objets connectés T peuvent présenter une interface pour entrer manuellement l'évènement et des informations par les utilisateurs, qui sont envoyés au serveur de contrôle S, afin de déterminer dans le graphe d'évacuation les noeuds le plus proche de l'évènement;

Les objets connectés T peuvent présenter des moyens pour notifier, aux utilisateurs, la mise à jour du chemin.

Les notifications sont des messages d'information envoyés par le serveur vers les objets connectés T pour les informer des mises à jour sur le trajet d'évacuation ou/et du délai estimé pour évacuer le bâtiment. L'affichage des notifications est soit textuel, ou graphique, avec les nouvelles indications sur le chemin actualisé.

Le bâtiment peut être par exemple : une installation scolaire, un centre commercial, une infrastructure sportive, une salle de concert, une « fan zone ».

## Exemple de Bâtiment choisi en guise d'illustration

Le bâtiment choisi en guise d'illustration comporte :

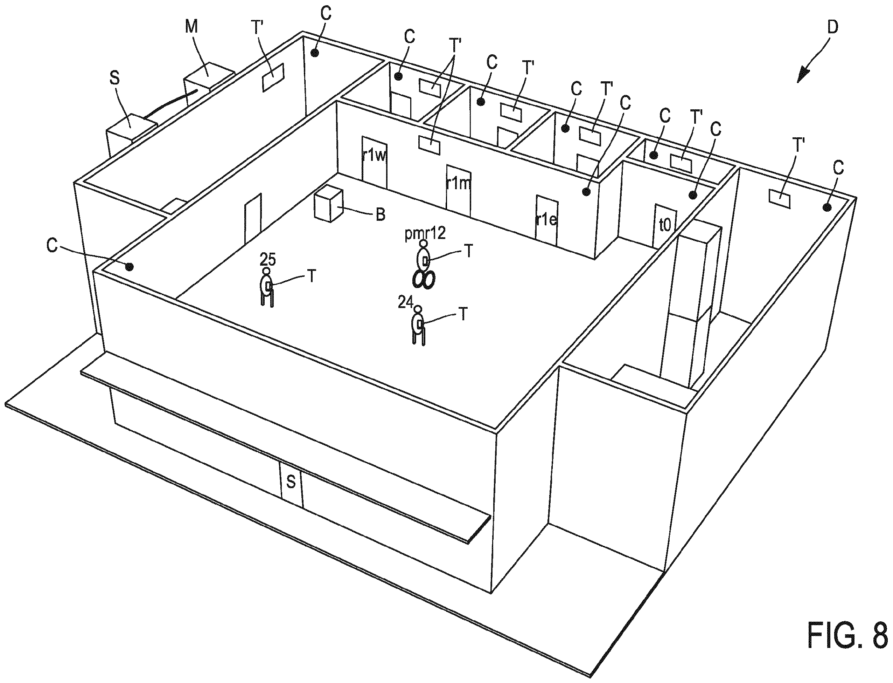

1. Deux étages, voir Fig. 8 :

   (a) Rez de chaussée, dénommé "Rdc" ;
   (b) Un étage supérieur, dénommé "R1"

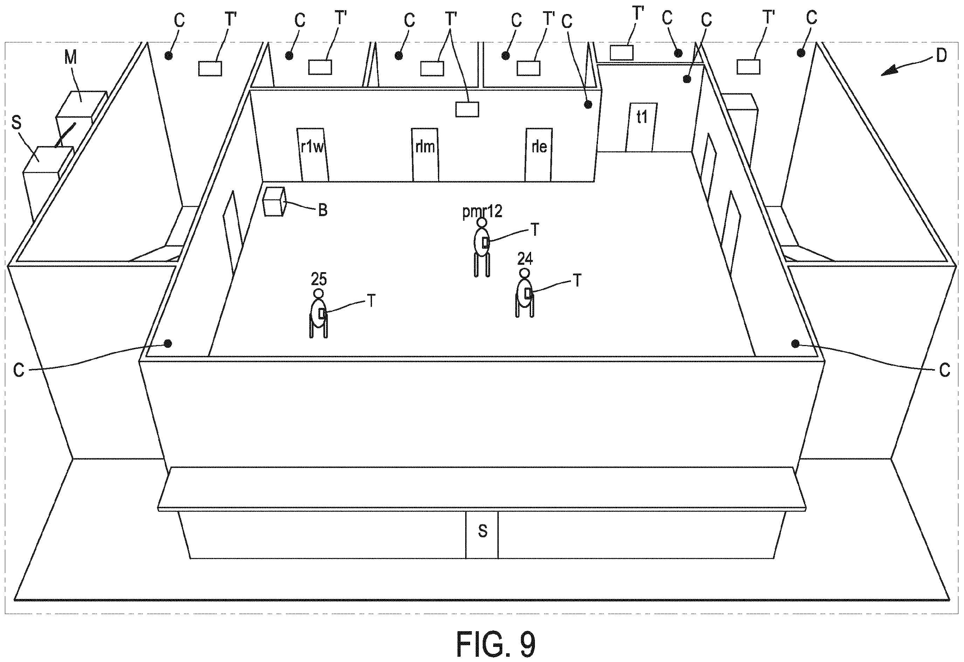

2. L'étage "R1" contient, voir Fig. 9 :

   (a) 4 salles dénommées "r1w", "r1m", "r1e" (situées, respectivement, côté "Ouest", "Milieu", "Est") et "t1" qui sert de local technique.
   Depuis chacune des 4 salles, une porte (sur laquelle est inscrit le nom de la salle) permet d'accéder au hall.

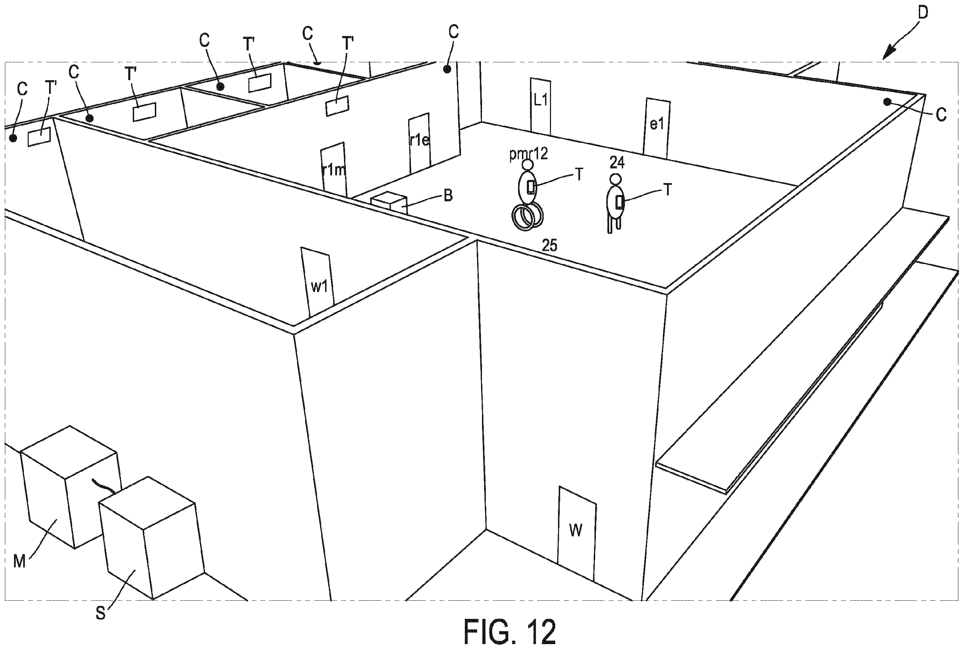

   (b) Un hall qui permet ensuite d'accéder au niveau inférieur "Rdc" en passant par 3 chemins possibles en empruntant, voir Fig. 12 :

      i. soit la porte d'accès "Est", dénommée "e1",
      ii. soit la porte d'accès "Ouest", dénommée "w1",
      iii. soit la porte de l'ascenseur, dénommée "L1".

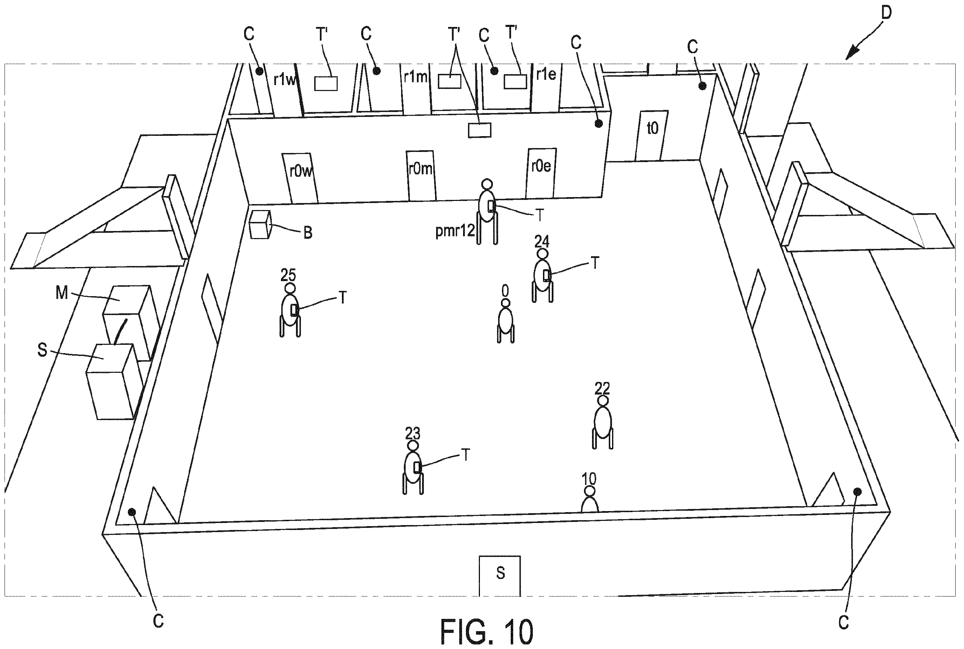

3. L'étage "Rdc" contient, voir Fig. 10 :

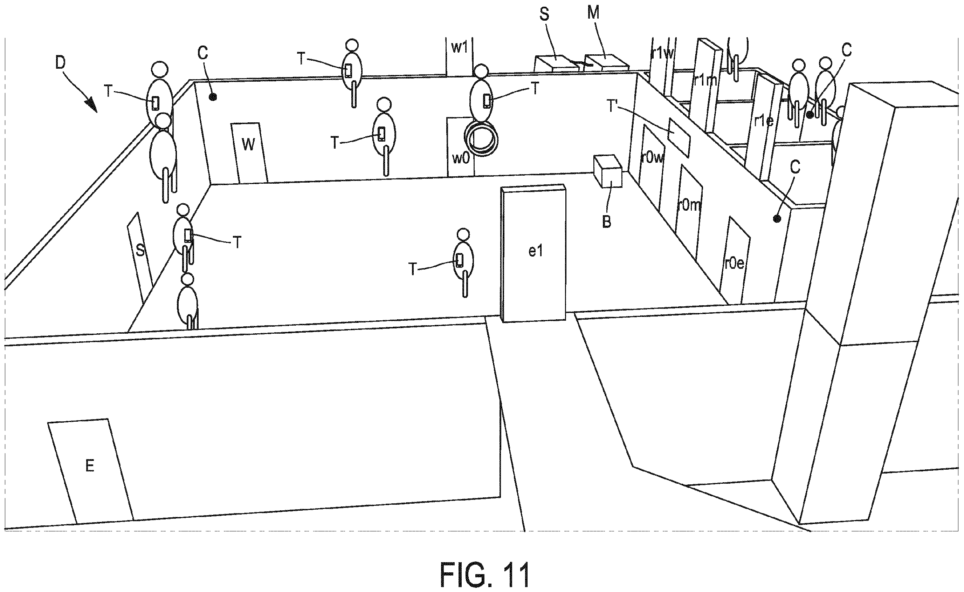

   (a) 4 salles dénommées "r0w", "r0m", "r0e" (situées, respectivement, côté "Ouest", "Milieu", "Est") et "t0" qui sert de local technique.
   Depuis chacune des 4 salles, une porte (sur laquelle est inscrit le nom de la salle) permet d'accéder au hall.
   (b) Un hall qui permet ensuite d'accéder à l'extérieur du bâtiment en empruntant, voir Fig. 11 :

      i. soit la porte de sortie "Est", dénommée "E",
      ii. soit la porte de sortie "Ouest", dénommée "W",
      iii. soit la porte de sortie "Sud", dénommée "S".

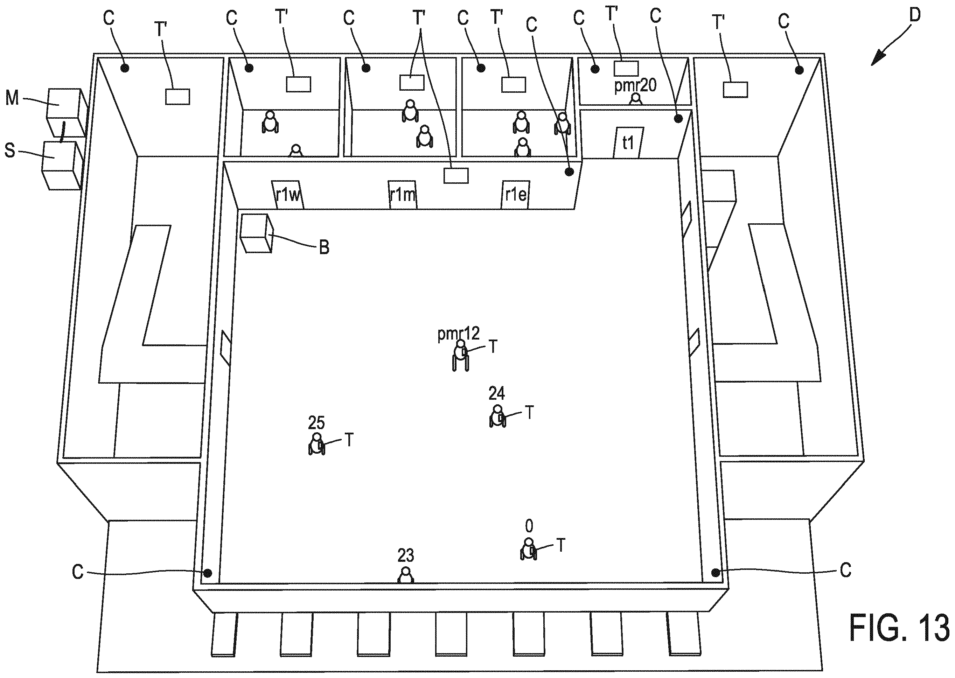

4. Deux escaliers, voir Fig. 13 :

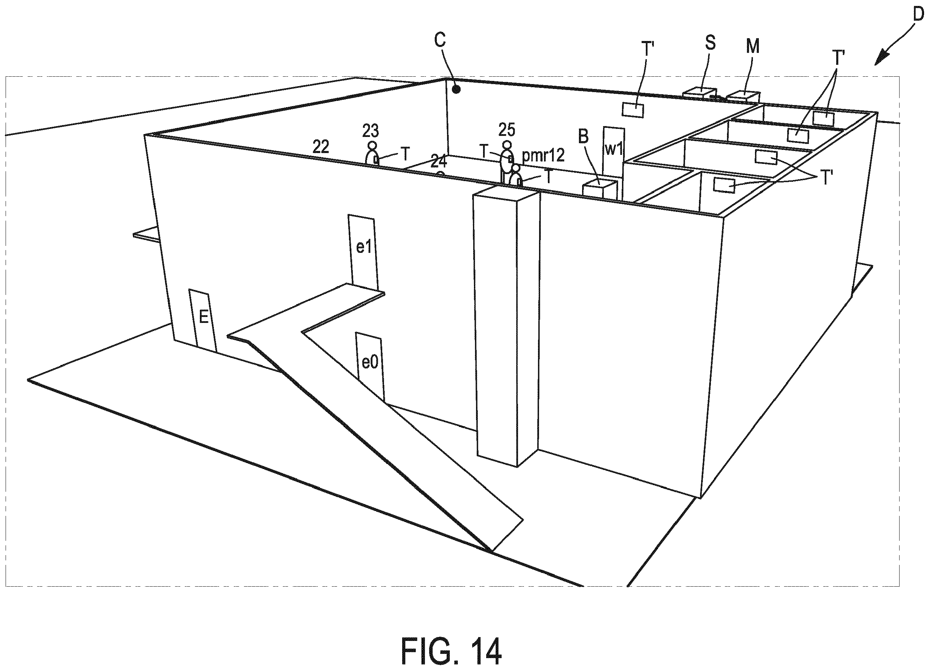

   (a) l'escalier "Est" qui est emprunté en sortant du niveau "R1" (porte "e1") pour redescendre vers un corridor au rez-de-chaussée qui débouche dans le hall du rez-de-chaussée en empruntant la porte dénommée "e0", voir Fig. 14 ;

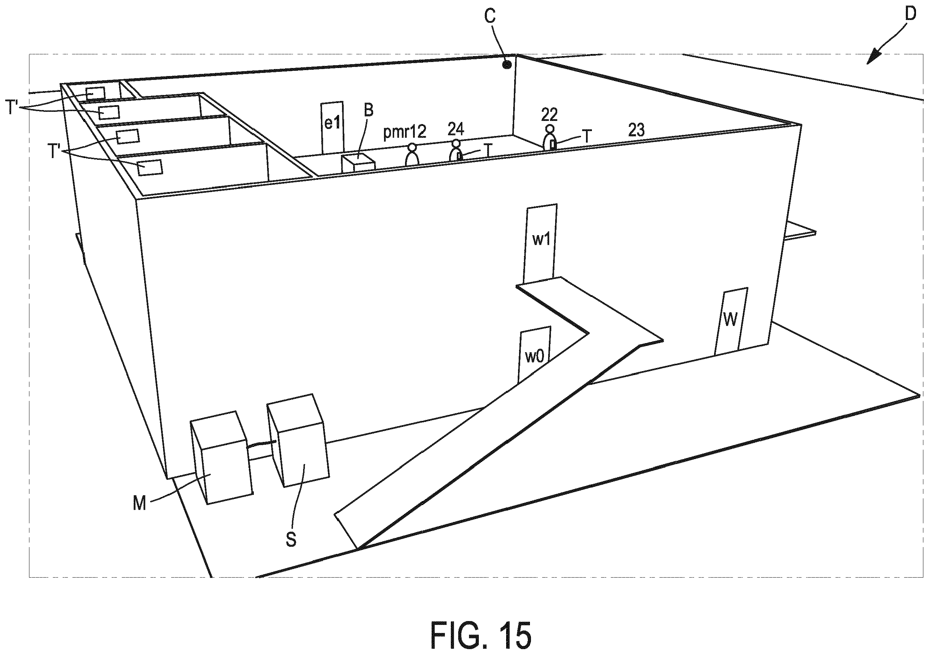

   (b) l'escalier "Ouest" qui est emprunté en sortant du niveau "R1" (porte "w1") pour redescendre vers un corridor au rez-de-chaussée qui débouche dans le hall du rez-de-chaussée en empruntant la porte dénommée "w0", voir Fig. 15 ;

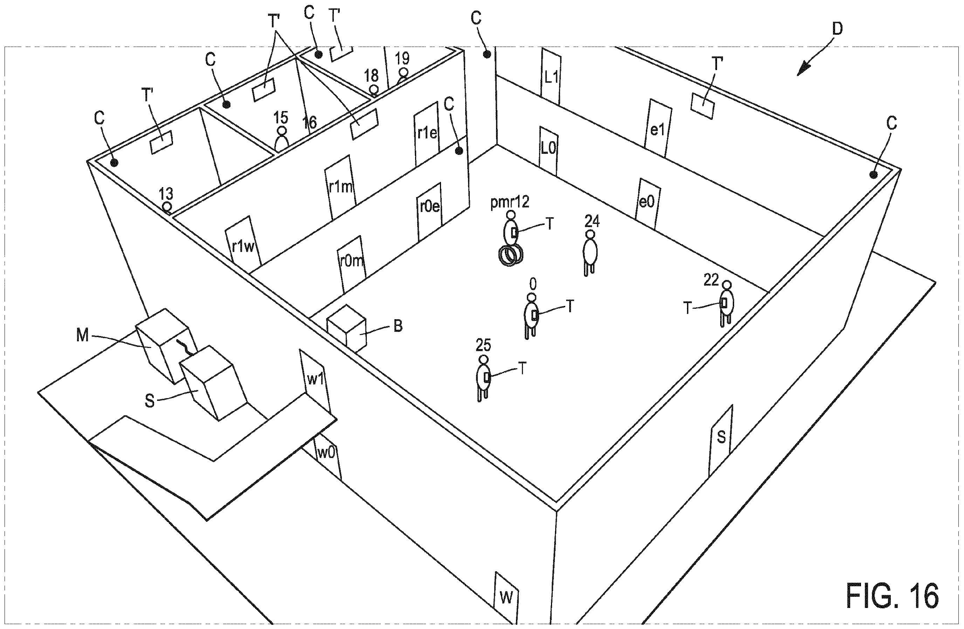

5. Un ascenseur, voir Fig. 16 :

(a) dont la porte au niveau "R1" est dénommée "L1" ;
(b) dont la porte au niveau "R0" est dénommée "L0".

## Extraction des noeuds et arêtes A

### Noeuds

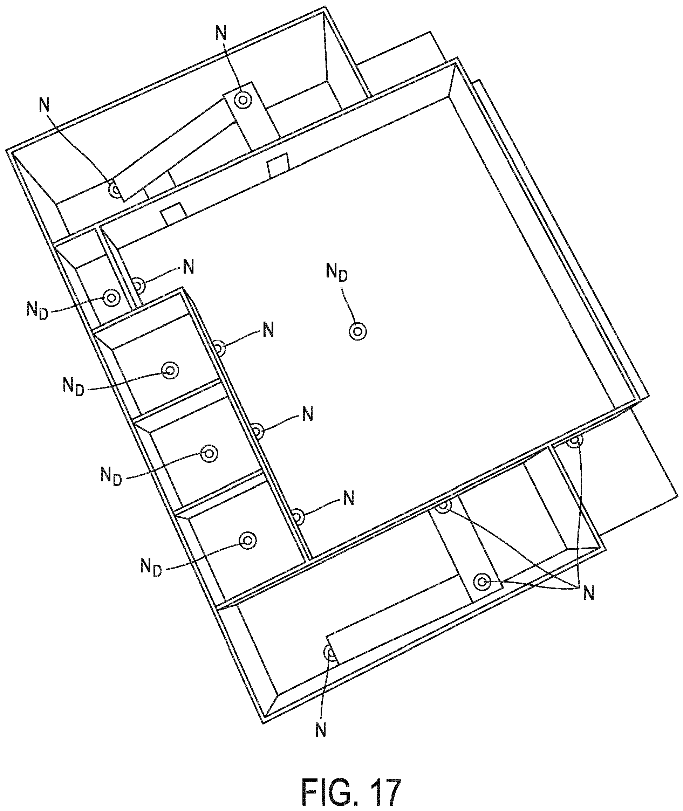

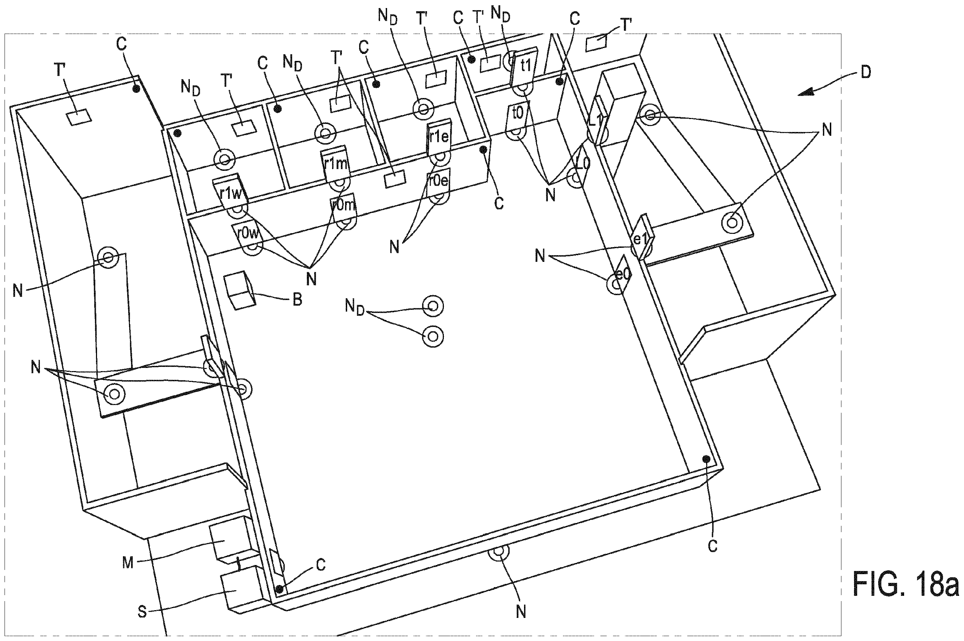

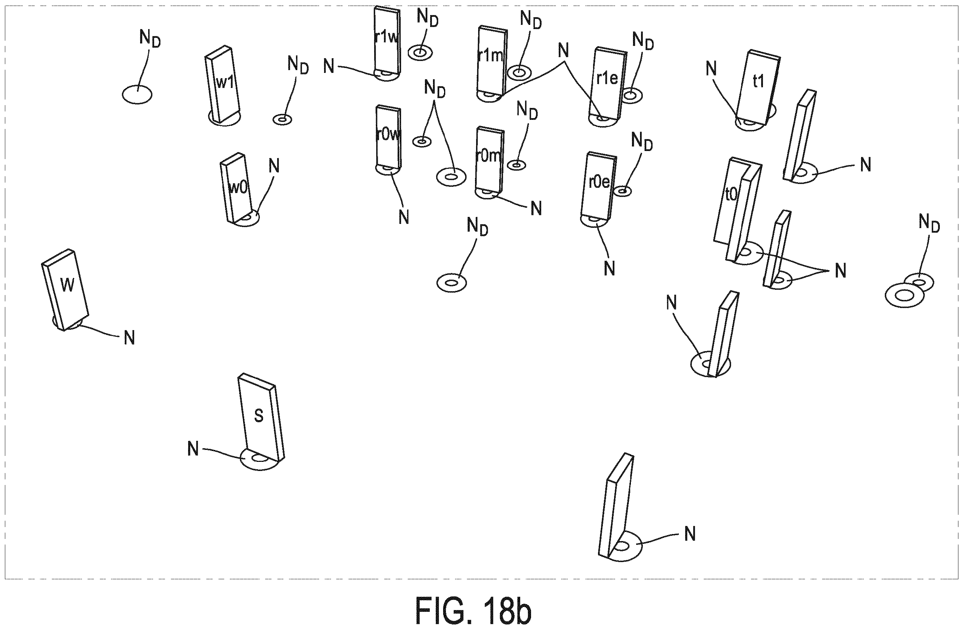

Les noeuds sont des points "virtuels". Ils sont de deux types, voir Figs. 17 - 18 :

1. noeud dispatcheur Nd : il représente le centre géométrique de chacun des divers halls et salles ; ce centre est aussi appelé "centroïde".

2. noeud de passage, qui représente :

(a) un seuil de porte (salle, ascenseur, hall),
(b) un point en extrémité de palier d'escalier (point haut ou bas).

### Arêtes A

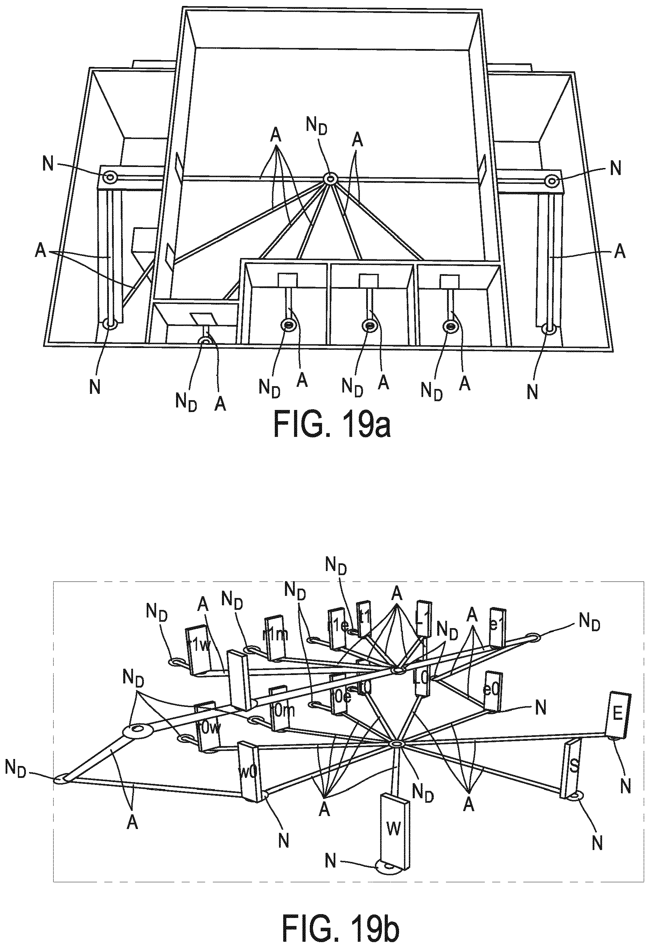

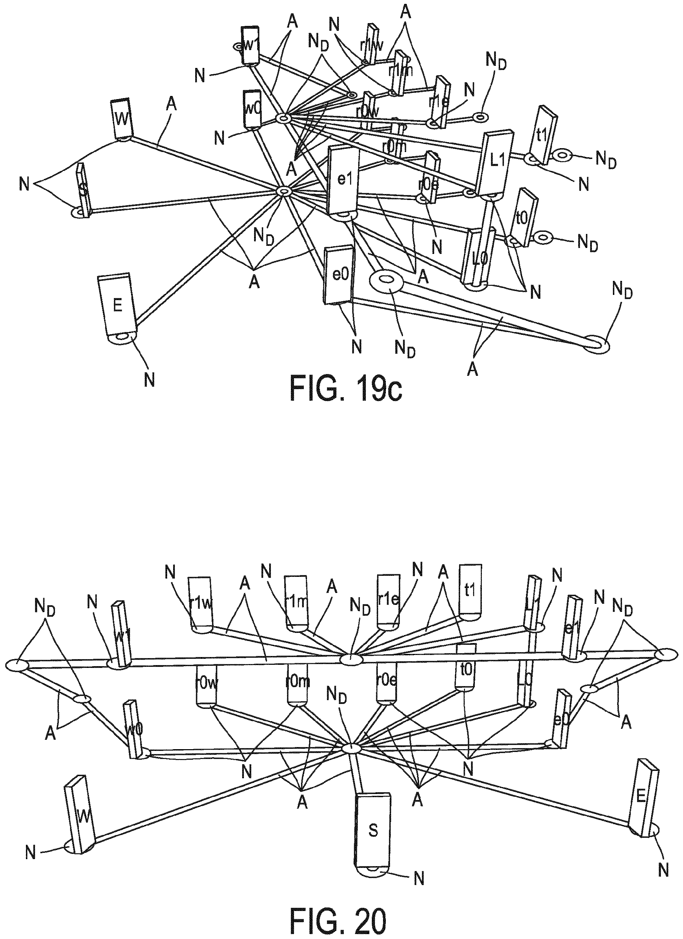

Les arêtes A, liaisons bidirectionnelles sauf cas particuliers, sont des segments de droites virtuelles qui relient deux noeuds successifs sans rencontrer d'obstacles et sans perte de visibilité.
Elles sont définies selon la méthodologie suivante, voir Fig. 19 :

1. "noeud dispatcheur Nd" à "noeud de passage" : l'arête relie le noeud "centroïde" d'une salle ou hall à un noeud de passage.

2. "noeud de passage" à "noeud de passage" : l'arête relie le noeud "seuil" d'une porte à un noeud de passage d'une surface de transfert.

A titre d'exemple, on peut considérer les cas suivants, pour les surfaces de transferts :

(a) noeuds seuils des portes d'un niveau au suivant, dans le cas d'ascenseurs, par exemple.
(b) noeuds d'extrémité ou intermédiaires des paliers et palées, dans le cas d'escaliers, rampes d'accès ou escalators, par exemple.

NOTA : Il convient de remarquer, qu'en réalité, ces surfaces de transferts peuvent être, elles-mêmes, définies comme des espaces (cas de corridors), dans les maquettes digitales (BIM ou CIM).
Dans ce cas, les points extrêmes (points "haut", "bas", "intermédiaire") seront considérés comme des "noeuds de passage" reliés aux noeuds dispatcheur Nds des espaces intermédiaires (leurs centroïdes).

## DAG : Graphe orienté acyclique (en anglais « Directed Acyclic Graph »)

Le Graphe orienté acyclique (DAG) est défini par l'arborescence entièrement constituée des "noeuds" et des "arêtes A" les reliant deux à deux, voir Fig. 20 :

1. A l'étage "R1", le graphe est constitué d'un sous-graphe (en anglais « sub-DAG » "R1"), défini comme suit :

(a) en extrémité du DAG, il y a les 4 noeuds centroïdes des salles "r1w", "r1m", "r1e" et 't1'
(b) 4 arêtes A les relient aux noeuds de passage (seuils des portes de chacune de ces 4 salles)
(c) de ces 4 noeuds seuils des portes, partent alors 4 arêtes A qui les relient au noeud dispatcheur Nd (centroïde) du hall attenant et communiquant avec ces 4 salles ; il pourrait être représenté aussi par les arêtes A qui relieraient les 4 noeuds seuils des portes directement vers les noeuds seuil de porte ("Est" et "Ouest") et le noeud seuil escalier, sans passer par le noeud dispatcheur Nd (centroïde) du hall ; ici les arêtes A passent par le noeud dispatcheur Nd (centroïde) car il a été considéré dans cet exemple qu'il fallait passer nécessairement par ce noeud dispatcheur Nd ;

(d) de ce noeud dispatcheur Nd partent 3 arêtes A qui le relient aux 3 portes permettant d'accéder au niveau "Rdc", à savoir par un transfert via l'ascenseur, l'escalier "Est" et l'escalier "Ouest" par les noeuds seuils 'e1', w1' et 'L1'

2. Pour le transfert de l'étage "R1" vers le rez-de-chaussée "Rdc", le graphe comporte un sous-graphe (en anglais « sub-DAG » "R1 to Rdc"), défini comme suit :

(a) chaque noeud seuil de porte de l'escalier ("Est" et "Ouest") est relié par une arête à un noeud extrême du palier supérieur

(b) chaque noeud extrême du palier supérieur est relié par une arête à un noeud extrême bas de l'escalier (palier inférieur)

(c) chaque noeud bas est relié par une arête à un noeud seuil de la porte d'accès au hall du niveau "Rdc".

(d) le noeud seuil de la porte d'ascenseur (niveau R1) est relié par une arête au noeud seuil de la porte d'ascenseur (niveau Rdc).

3. Au niveau "Rdc", le graphe est constitué d'un sous-graphe (en anglais « sub-DAG » "Rdc"), défini comme suit :

(a) en extrémité du DAG, il y a les 4 noeuds centroïdes des salles "r0w", "r0m", "r0e" et "t0"

(b) 4 arêtes A les relient aux noeuds de passage (seuils des portes de chacune de ces 4 salles)

(c) de ces 4 noeuds seuils des portes et des 3 portes d'accès depuis le niveau "R1" (noeuds "e0", "w0" et "L0") partent alors 7 arêtes A qui les relient au noeud dispatcheur Nd (centroïde) du hall attenant et communiquant avec ces 4 salles et les portes de transfert depuis le niveau "R1" par les noeuds seuils 'e1', 'w1' et 'L1' ; il pourrait être représenté aussi par les arêtes A qui relieraient les 4 noeuds seuils des portes directement vers les noeuds seuil de porte ("E", "S" et "W") et le noeud seuil escalier, sans passer par le noeud dispatcheur Nd (centroïde) du hall ; ici les arêtes A passent par le noeud dispatcheur Nd (centroïde) car il a été considéré dans cet exemple qu'il fallait passer nécessairement par ce noeud dispatcheur Nd (centroïde);

(d) de ce noeud dispatcheur Nd partent 3 arêtes A qui le relient aux 3 noeuds seuils des portes ("E", "S", "W") permettant de quitter le bâtiment.

### USAGERS : noeuds dispatcheur Nds associés

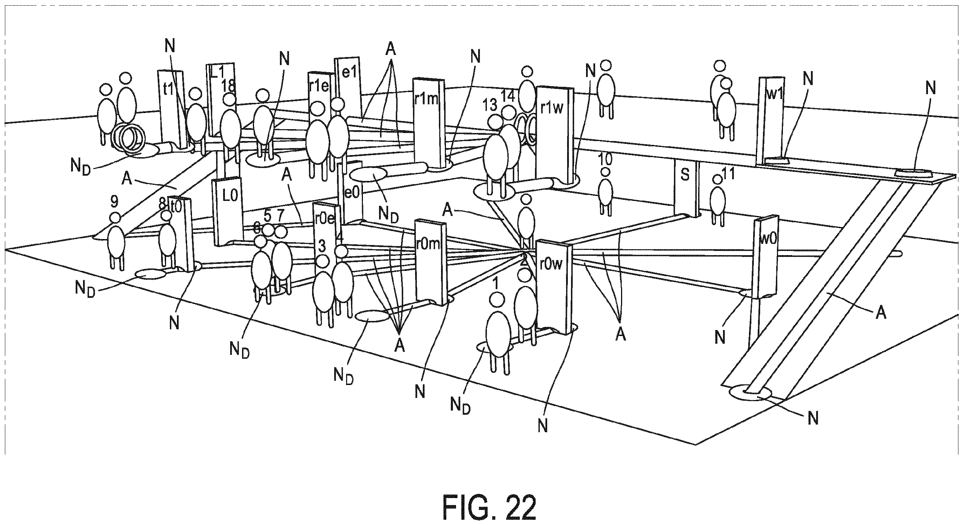

En guise d'illustration, divers utilisateurs (USAGERS) dont des PMR (Personnes à Mobilité Réduite) sont arbitrairement positionnés dans le bâtiment, voir Fig. 22. De ce fait, leur position étant localisée dans un espace (salle, hall, corridor), elles sont alors associées au noeud dispatcheur Nd (centroïde) de cet espace, i.e. :

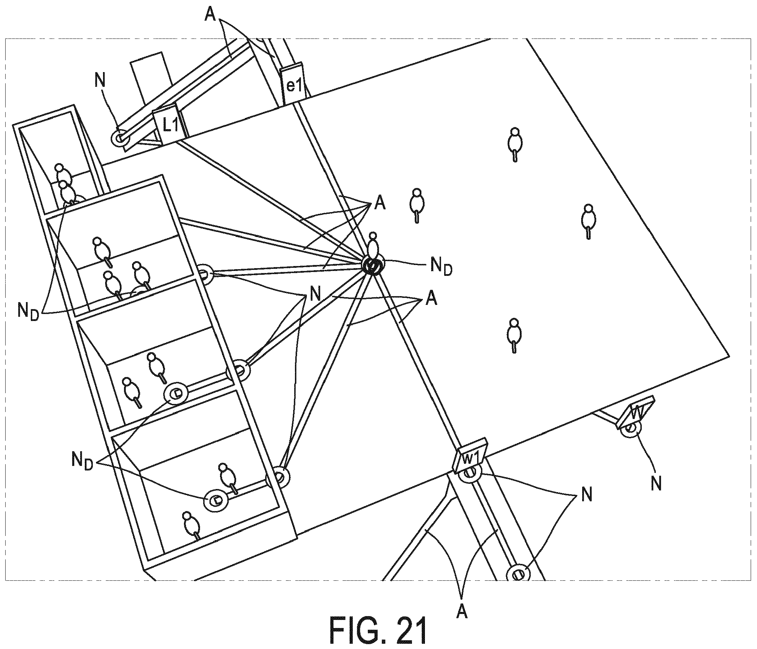

1. A l'étage "R1", les utilisateurs sont identifiés dans les positions illustrées en Fig. 21 :

(a) les deux personnes se trouvant en salle "r1w", y étant localisées, sont associées au noeud dispatcheur Nd (centroïde) de cette salle "r1w".

(b) les deux personnes se trouvant en salle "r1m", y étant localisées, sont associées au noeud dispatcheur Nd de cette salle "r1m".

(c) les trois personnes se trouvant en salle "r1e", y étant localisées, sont associées au noeud dispatcheur Nd de cette salle "r1e".

(d) les deux personnes, dont une PMR, se trouvant en salle "t1", y étant localisées, sont associées au noeud dispatcheur Nd de cette salle "t1" .

(e) les cinq personnes, dont une PMR, se trouvant dans le hall de cet étage, y étant localisées, sont associées au noeud dispatcheur Nd de cet espace de hall.

2. A l'étage "Rdc", les utilisateurs sont identifiés dans les positions illustrées en Fig. 22:

(a) les deux personnes se trouvant en salle "r0w", y étant localisées, sont associées au noeud dispatcheur Nd (centroïde) de cette salle "r0w".

(b) les deux personnes se trouvant en salle "r0m", y étant localisées, sont associées au noeud dispatcheur Nd de cette salle "r0m".

(c) les trois personnes se trouvant en salle "r0e", y étant localisées, sont associées au noeud dispatcheur Nd de cette salle "r0e".

(d) les deux personnes se trouvant en salle "t0", y étant localisées, sont associées au noeud dispatcheur Nd de cette salle "t0".

(e) les trois personnes se trouvant dans le hall de cet étage, y étant localisées, sont associées au noeud dispatcheur Nd de cet espace du hall.

## DODAG' : DAG orienté spécifique à chaque usager

Pour rappel, le DAG est global au bâtiment : graphe "noeuds N, Nd-arêtes A". Il dépend de l'architecture (répartition des espaces) : il décrit les chemins depuis tout endroit du bâtiment vers les sorties.

Le DODAG', propre à chaque usager, en est une portion (sous-graphe dynamique), démarrant depuis la position courante (usager), pour guider l'usager vers la sortie la plus idoine (guidage optimal selon son profil et les foules présentes), voir Table 1 :

1. pour les usagers, des 4 salles à l'étage "R1", l'évacuation exige de les guider, d'abord, vers les noeuds de passage les plus proches (noeud "seuil de porte" de leur salle). Ils accèdent, dès lors, à l'espace attenant soit le hall du niveau "R1" ("hall R1"). Leur chemin sera alors similaire à ceux déjà présents dans ce "hall R1", i.e. : les PMR empruntent l'ascenseur (noeud de passage "L1"), tandis que les "non PMR" peuvent emprunter l'ascenseur ou l'un des escaliers ("Est" : noeud de passage "e1", ou "Ouest" : noeud de passage "w1"). Acheminés via l'ascenseur ou les escaliers, ils débouchent dans le "hall Rdc", par les noeuds de passage ("L0", "e0" ou "w0" selon le chemin emprunté pour rejoindre le rez-de-chaussée). Ils doivent ensuite être orientés vers l'une des portes de sorties ("E", "S" ou "W"), selon l'encombrement des listes d'attente de ces 3 portes.

2. De manière similaire, les usagers des 4 salles (niveau Rdc) accèdent aux noeuds "seuil de porte" (noeud de passage) de leur salle pour accéder ainsi au hall du niveau "Rdc" (dit "hall Rdc"). Ils doivent ensuite être orientés vers l'une des 3 sorties ("E", "S" ou "W"), selon l'encombrement de leurs listes d'attente.

Table 1: Elaboration du DODAG' spécifique à chacun des usagers

| Etage | Espace | Usager | Assigné à centroïde (espace) | Couche 1 (Wait list) du noeud (porte) | Relais assigné à centroïde (espace) | Couche 2 (Wait list) cumul en (porte) |
|---|---|---|---|---|---|---|
| R1 | r1w | P :13,14 | (r1w) | (r1w) | (hall R1) | (L1,e1,w1) |
| | r1m | P :15,16 | (r1m) | (r1m) | (hall | (L1,e1,w1) |
| | r1e | P : 17,18,19 | (r1e) | (r1e) | R1) | (L1,e1,w1) |
| | t1 | Pmr :20 | (t1) | (t1) | (hall R1) | (L1) |
| | t1 | P :21 | (t1) | (t1) | (hall R1) | (L1,e1,w1) |
| | hall R1 | Pmr :12 | (hall R1) | (L1) | (stairs,lift) | (L0) |
| | hall R1 | P : 22,23,24 | (hall R1) | (L1,e1,w1) | (stairs,lift) | (L0,e0,w0) |
| Rdc | r0w | P :1,2 | (r0w) | (r0w) | (hall Rdc) | (E,S,W) |
| | r0m | P :3,4 | (r0m) | (r0m) | (hall Rdc) | (E,S,W) |
| | r0e | P :5,6,7 | (r0m) | (r0e) | (hall Rdc) | (E,S,W) |
| | t0 | P :8,9 | (t0) | (t0) | (hall Rdc) | (E,S,W) |
| | hall0 | P : 0,10,11 | (hall Rdc) | (E,S,W) | Evacués | Evacués |

(a) Listes d'attente aux noeuds de passage : couche (1) puis transfert à couche (2)

| Usager | Couche 1 (Wait list) du noeud (porte) | Couche 2 (Wait list) cumul en (porte) | Relais assigné à centroïde (espace) | Couche 3 (Wait list) cumul en (porte) | Relais assigné à centroïde (espace) | Couche 4 (Wait list) cumul en (porte) |
|---|---|---|---|---|---|---|
| P :13,14 | (r1w) | (L1,e1,w1) | (stairs,lift) | (L0,e0,w0) | (hall Rdc) | (E,S,W) |

(suite)

| Usager | Couche 1 (Wait list) du noeud (porte) | Couche 2 (Wait list) cumul en (porte) | Relais assigné à centroïde (espace) | Couche 3 (Wait list) cumul en (porte) | Relais assigné à centroïde (espace) | Couche 4 (Wait list) cumul en (porte) |
|---|---|---|---|---|---|---|
| P :15,16 | (r1m) | (L1,e1,w1) | (stairs,lift) | (L0,e0,w0) | (hall Rdc) | (E,S,W) |
| P : 17,18,19 | (r1e) | (L1,e1,w1) | (etairs,lift) | (L0,e0,w0) | (hall Rdc) | (E,S,W) |
| Pmr :20 | (t1) | (L1) | (lift) | (L0) | (hall Rdc) | (E,S,W) |
| P :21 | (t1) | (L1,e1,w1) | (stairs,lift)| | (L0,e0,w0) | (hall Rdc) | (E,S,W) |
| Pmr :12 | (L1) | (L0) | (hall Rdc) | (E,S,W) | Evacués | Evacués |
| P : 22,23,24 | (L1,e1,w1) | (L0,e0,w0) | (hall Rdc) | (E,S,W) | Evacués | Evacués |
| P :1,2 | (r0w) | (E,S,W) | Evacués | Evacués | Evacués | Evacués |
| P :3,4 | (r0m) | (E,S,W) | Evacués | Evacués | Evacués | Evacués |
| P :5,6,7 | (r0e) | (E,S,W) | Evacués | Evacués | Evacués | Evacués |
| P :8,9 | (t0) | (E,S,W) | Evacués | Evacués | Evacués | Evacués |
| P : 0,10,11 | (E,S,W) | Evacués | Evacués | Evacués | Evacués | Evacués |

(b) Listes d'attente aux noeuds de passage : couches (1), (2) cumul à (3) et (4)

### Listes d'attente et évacuation guidée optimale

A partir des DODAG's, établis pour chaque usager (voir Table 1), les listes d'attente des noeuds de passage sont alors établies depuis les noeuds les plus lointains du DAG (salles du niveau "R1") jusqu'aux noeuds cibles (portes de sorties ("E", "S", "W")) :

1. Les listes d'attente des noeuds cibles sont établies, à partir des positions des usagers présents dans le hall "R0" (usagers associés au noeud dispatcheur Nd de l'espace : "hall R0"). La couche 1 de ces listes contient alors la liste des personnes et leur position, en termes de distance pour atteindre la porte.

Pour simplifier la compréhension, un damier virtuel de maille (50cmx50cm) est projeté sur la surface des planchers. Les usagers sont placés au centre des cellules du damier.

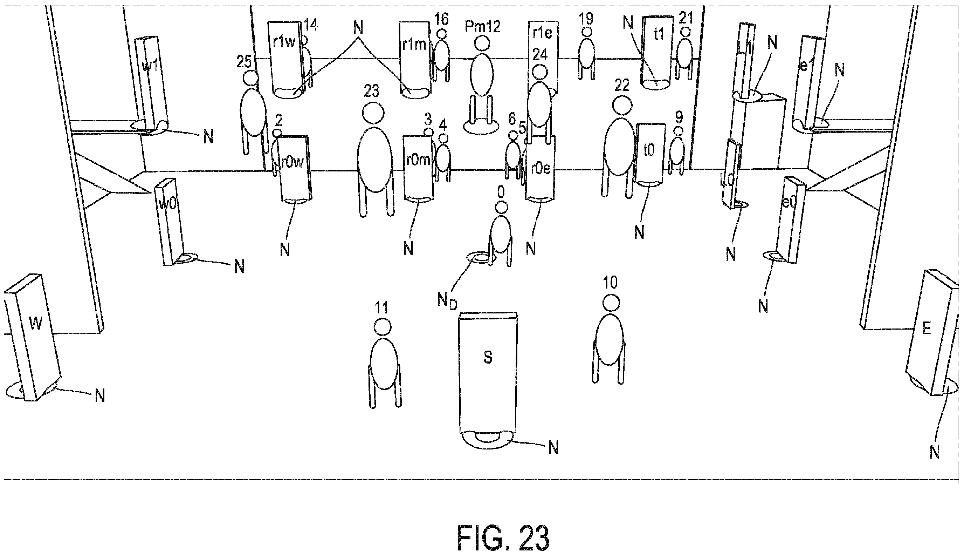

Leur distance jusqu'à la porte de sortie, peut être traduite en termes de nombre de cases séparant l'usager de la porte, afin d'en faciliter l'illustration, voir Fig. 23 :

(a) porte "E" :

$$waitList(E) = [P0 : 27cases]; [P10 : 12cases]; [P11 : 20cases] \quad (1)$$

(b) porte "S"

$$waitList(S) = [P0 : 18cases]; [P10 : 7cases]; [P11 : 5cases] \quad (2)$$

(c) porte "W"

$$waitList(W) = [P0 : 30cases]; [P10 : 21cases]; [P11 : 13] \quad (3)$$

2. Pour les autres usagers, ils doivent d'abord pouvoir accéder au hall (« hall Rdc ») afin d'être associés ensuite au noeud centroïde du hall et pouvoir être transférés sur les liste d'attente des 3 portes de sortie (car elles sont attenantes au "hall Rdc"). En effet, ce centroïde hérite des listes d'attente des noeuds de passage attenants, à savoir les noeuds (seuils des portes) : (w0), (r0w), (r0m), (r0e), (t0), (L0) et (e0).

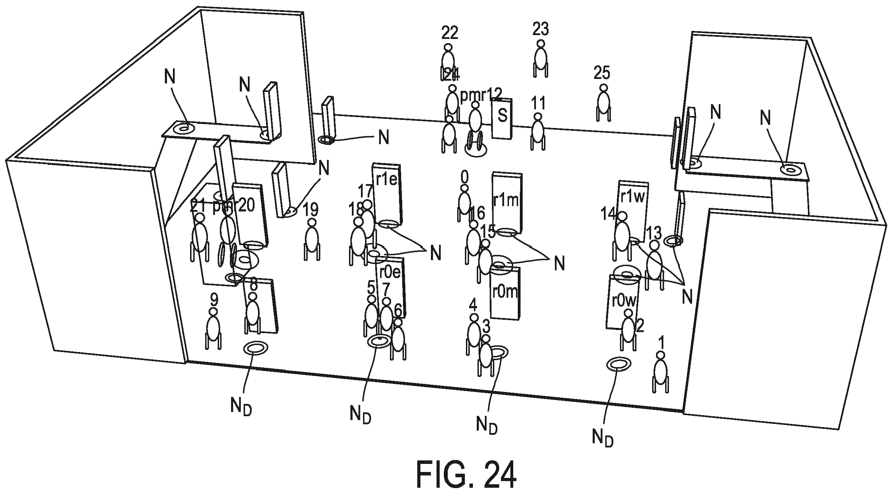

Pour les 3 portes de sortie ("E", "S", "W"), elles héritent ainsi des listes des couches supérieures (couches 2 et plus). Ces listes sont établies comme suit, voir Fig. 24 :

(a) porte "w0" : hérite de la liste d'attente du noeud de la porte (w1), depuis étage "Rdc", couche de rang immédiatement supérieur

(b) porte "r0w" :

$$waitList(r0w) = [P1 : 8cases]; [P2 : 2cases] \quad (4)$$

(c) porte "r0m" :

$$waitList(r0w) = [P3 : 6cases]; [P4 : 5cases] \quad (5)$$

(d) porte "r0e" :

$$waitList(r0w) = [P5 : 3cases]; [P6 : 6cases]; [P7 : 3cases] \quad (6)$$

(e) porte "t0" :

$$waitList(r0w) = [P8 : 0case]; [P9 : 4cases] \quad (7)$$

(f) porte "L0" : hérite de la liste d'attente du noeud de la porte (L1), depuis étage "R1", couche de rang immédiatement supérieur,

(g) porte "e0" : hérite de la liste d'attente du noeud de la porte (e1), depuis étage "R1", couche de rang immédiatement supérieur.

NOTA : Il convient de remarquer que ces listes des noeuds de passage sont transmises, par héritage, à celles des 3 portes de sortie. La distance (nombre de cases) depuis la position courante de l'usager à la porte de sortie est obtenue en ajoutant la distance entre le noeud de la porte (de la salle, exemple "r0w") à la porte de sortie (exemple, sortie "S").

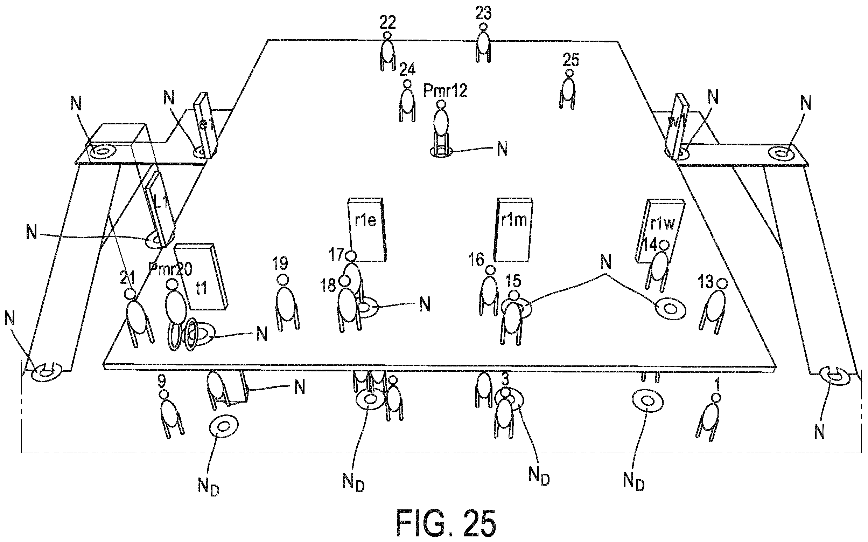

3. Partant des portes de sortie (comme niveau le plus bas en termes de couches dans les listes d'attente), les couches les plus lointaines seraient celles qui seront héritées des noeuds (seuils de porte) des salles de l'étage "R1"), voir Fig. 25 :

(a) escalier "w0" : hérite de la liste d'attente du noeud de la porte (w1), depuis étage "R1", couche de rang immédiatement supérieur

(b) porte "r1w" :

$$waitList(r1w) = [P13 : 6cases]; [P14 : 2cases] \quad (8)$$

(c) porte "r1m" :

$$waitList(r1m) = [P15 : 6cases]; [P16 : 5cases] \quad (9)$$

(d) porte "r1 e" :

$$waitList(r1e) = [P17 : 3cases]; [P18 : 5cases]; [P7 : 8cases] \quad (10)$$

(e) porte "t1" :

$$waitList(t1) = [Pmr20 : 2cases]; [P21 : 4cases] \quad (11)$$

**Mise en oeuvre de l'algorithme d'optimisation des listes d'attente**

Une fois les diverses listes d'attente des noeuds de passage établies, les usagers y sont rangés selon la distance aux noeuds de passages intermédiaires concernés, lesquelles listes ordonnées sont héritées de proche en proche par les noeuds de passage jusqu'à aboutir aux portes de sortie du bâtiment.

Afin de montrer la performance de l'algorithme développé et objet de la revendication de la présente invention, deux exemples sont choisis en guise d'illustration.

A cet effet, deux salles de réunion sont choisies avec deux configurations particulières, pour justifier des performances de l'algorithme développé :

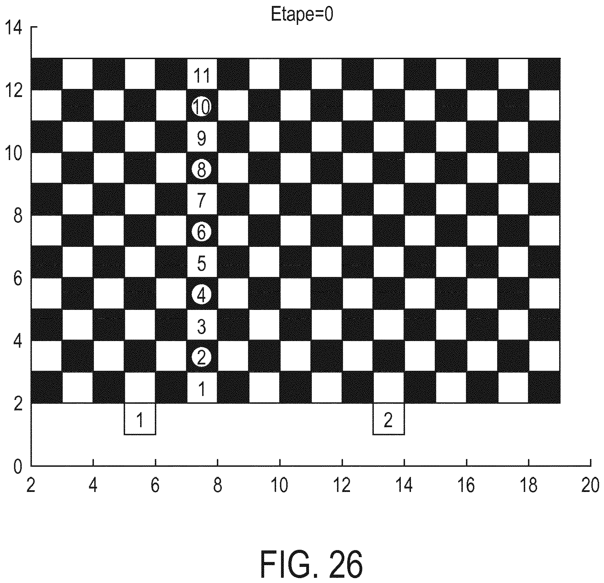

**1. Cas d'extraction en forme de "Zip", voir Fig. 26.**

(a) Par le critère de la distance la plus courte entre l'usager et les portes, ce serait la porte "1" qui accueillerait les usagers.

(b) On adopte l'hypothèse qu'il faille, en mouvement, toujours laisser une case vide entre deux usagers (éviter les chocs). On adopte aussi l'hypothèse que la vitesse de déplacement est uniforme (en général : une moyenne de 1.2 m/s, en cadence normale).

(c) Il aurait alors fallu 3 pas de temps pour évacuer la personne "P :1" puis "((1+1).10 personnes restantes" pas de temps soit un total de 23 pas (une case par pas de temps).

(d) En gérant de manière optimisée les listes d'attente des 2 portes, on réduit à 17 pas le temps d'évacuation complète, les listes d'attente étant définies comme suit, voir Fig. 26 :

| Usager | Porte :1 | Porte :2 |
|--------|----------|----------|
| 1 | 3 pas | 7 pas |
| 2 | 4 | 8 |
| 3 | 5 | 9 |
| 4 | 6 | 10 |
| 5 | 7 | 11 |
| 6 | 8 | 12 |
| 7 | 9 | 13 |
| 8 | 10 | 14 |
| 9 | 11 | 15 |
| 10 | 12 | 16 |
| 11 | 13 | 17 |

Il convient de rappeler que chaque usager occupera, dans la liste réordonnée de chaque porte, la position maximale entre la sienne, avant réarrangement, et la position de l'usager le précédant à laquelle sont ajoutées deux positions (devant observer une cellule vide pour éviter les chocs avec le précédent usager sur la liste). Il sera assigné à la liste où il occupera le rang le plus faible entre les deux listes.

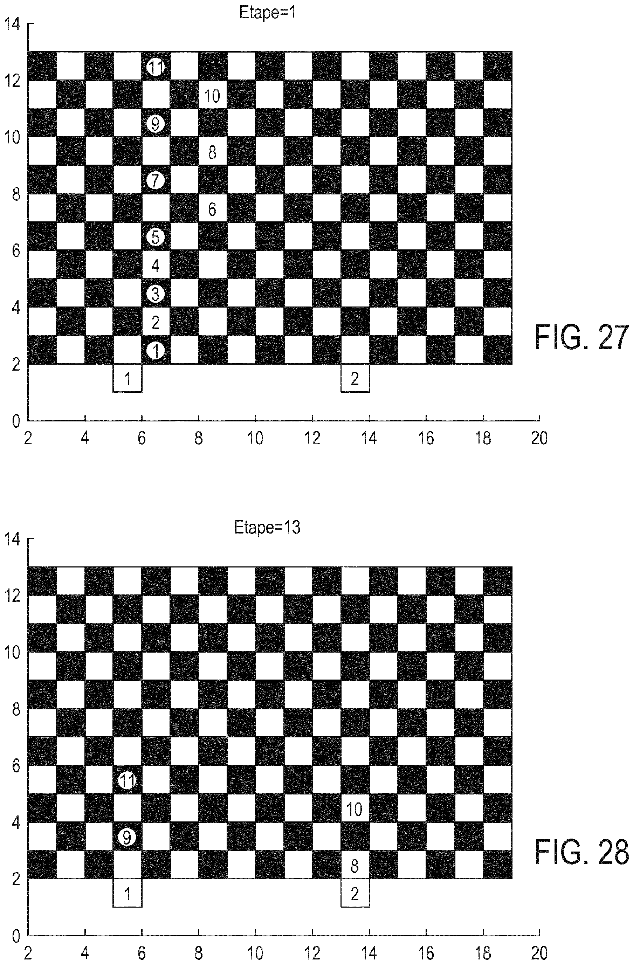

Ainsi les listes, une fois ordonnée, en tenant compte des critères (laisser un pas entre deux usagers se suivant) donnent les positions d'évacuation optimisée suivantes, voir Fig. 27 - 28 :

| Usager | Porte :1 | Porte :2 | affectation : évacuation |
|---|---|---|---|
| 1 | $\max(3,0+1)=3$ | $\max(7,0+1)=7$ | $\min(3,7)=\mathbf{3}$ **pas @porte 1** |
| 2 | $\max(4,3+2)=5$ | $\max(8,0+1)=8$ | $\min(5,8)=\mathbf{5}$ **p. @porte 1** |
| 3 | $\max(5,5+2)=7$ | $\max(9,0+1)=9$ | $\min(7,9)=\mathbf{7}$ **p. @porte 1** |
| 4 | $\max(6,7+2)=9$ | $\max(10,0+1)=10$ | $\min(9,10)=\mathbf{9}$ **p. @porte 1** |
| 5 | $\max(7,9+2)=11$ | $\max(11,0+1)=11$ | $\min(11,11)=\mathbf{11}$ **p. @porte 1** (ou 2 |
| 6 | $\max(8,11+2)=13$ | $\max(12,0+1)=12$ | $\min(13,12)=\mathbf{12}$ **p. @porte 2** |
| 7 | $\max(9,11+2)=13$ | $\max(13,12+2)=14$ | $\min(13,14)=\mathbf{13}$ **p. @porte 1** |
| 8 | $\max(10,13+2)=15$ | $\max(14,12+2)=14$ | $\min(15,14)=\mathbf{14}$ **p. @porte 2** |
| 9 | $\max(11,13+2)=15$ | $\max(15,14+2)=16$ | $\min(15,16)=\mathbf{15}$ **p. @porte 1** |
| 10 | $\max(12,15+2)=17$ | $\max(16,14+2)=16$ | $\min(17,16)=\mathbf{16}$ **p. @porte 2** |
| 11 | $\max(13,15+2)=17$ | $\max(17,16+2)=18$ | $\min(17,18)=\mathbf{17}$ **p. @porte 1** |

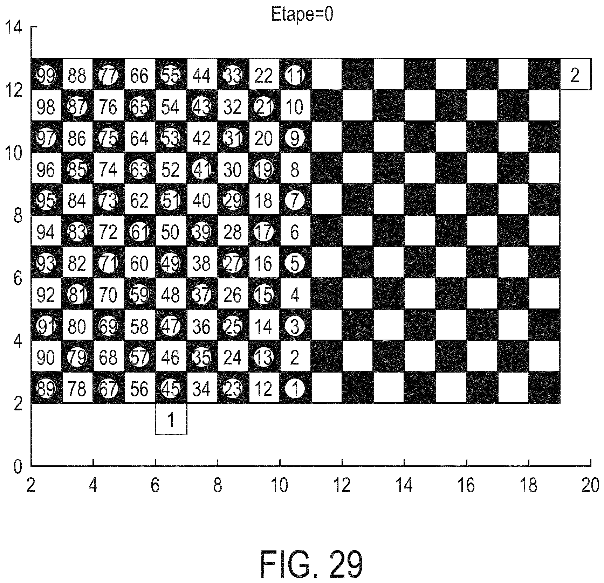

**2. Cas d'extraction dans le cas d'une salle densément occupée (99 personnes) et ayant 2 portes, voir Fig. 29**

(a) Par le critère de la distance la plus courte entre l'usager et les portes, on dénombrerait 89 usagers assignés à la porte "1", 6 usagers assignés à la porte "2", 4 usagers étant à égale distance des deux portes.

(b) On adopte l'hypothèse qu'il faille, en mouvement, toujours laisser une case vide entre deux usagers (éviter les chocs). On adopte aussi l'hypothèse que la vitesse de déplacement est uniforme (en général : une moyenne de 1.2 m/s, en cadence normale).

(c) Il aurait fallu alors, au minimum, 177 pas de temps pour évacuer entièrement la salle : 1 pas pour la personne "P45" et ((1+1) pas pour les 88 autres usagers les plus proches de la porte "1" que de la porte "2").

(d) En gérant de manière optimisée les listes d'attente des 2 portes, on réduit à 103 pas le temps d'évacuation complète, les listes d'attente étant d'abord constituées puis gérées de manière similaire à celle explicitée dans le cas du dégagement en forme de "Zip".

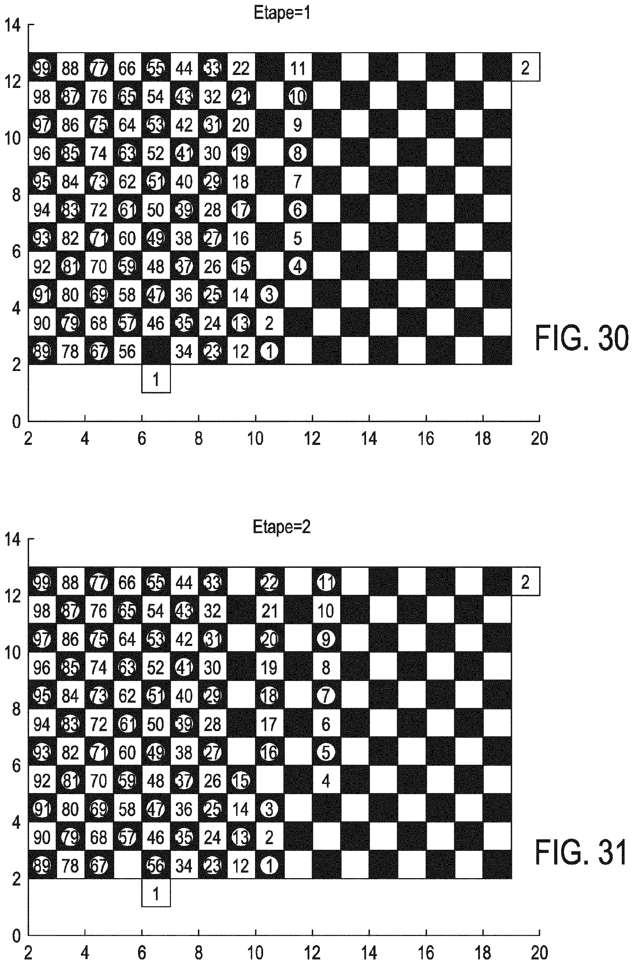

Quelques positions, en des instants arbitrairement choisis, sont illustrées par Fig. 30-31.

**Revendications**

**1.** Procédé de localisation d'utilisateurs et de guidage des déplacements des utilisateurs dans un bâtiment qui présente des espaces fermés délimités par des obstacles,
ledit guidage étant réalisé en fonction d'un évènement dans le bâtiment, suivant des chemins menant vers un ou plusieurs lieux cibles donnés ("E", "S", "W"),
le guidage étant adapté à chaque utilisateur,
avec des objets connectés (T, T') en liaison de communication sans fil avec un serveur des ressources à distance qui est un serveur de contrôle (S) accessible par un réseau de communication, via au moins une borne (B) de communication située dans le bâtiment,
comprenant les étapes suivantes:

    i- à partir d'une maquette numérique du bâtiment (BIM, CIM),

        - on définit et on calcule des noeuds,
        les noeuds se répartissant entre des noeuds dispatcheurs (Nd) ; et des noeuds de passage (N), les noeuds de passage (N) étant des points d'un chemin devant être emprunté par les utilisateurs pour se déplacer vers un ou divers lieux cibles donnés ("E", "S", "W"), les noeuds de passage (N) étant associés chacun à un noeud dispatcheur (Nd) ;
        - on définit et on calcule des arêtes (A),
        chaque arête reliant deux noeuds (N, Nd) successifs en traversant les espaces sans rencontrer les obstacles;
- on calcule automatiquement un graphe orienté acyclique (DAG) de déplacement vers le ou les lieux cibles, constitué avec les noeuds (N, Nd) et les arêtes (A),

ii- on détecte une localisation réelle d'un événement dans le bâtiment et une nature de l'évènement, que l'on stocke sur le serveur de contrôle (S) ;

iii- on calcule une position réelle de chaque utilisateur situé dans le bâtiment, avec pour les espaces fermés, la mesure de la puissance du signal de réception d'un objet connecté donné de l'utilisateur, réalisée par une liaison de communication sans fil à la ou les bornes (B) d'accès de communication en liaison de communication avec le serveur de contrôle (S), la ou les bornes (B) de communication ayant une position identifiée dans la maquette numérique (BIM, CIM) ;

iv- en fonction de la nature de l'évènement qui entrainent l'inaccessibilité de certains noeuds (N, Nd) du graphe orienté acyclique (DAG), on calcule un graphe orienté acyclique dit 'actualisé' (DAG') de déplacement vers le ou les lieux cibles ("E", "S", "W");

v- on transpose les positions réelles des utilisateurs dans la maquette numérique et on calcule le noeud dispatcheur (Nd) associé à chaque utilisateur et situé le plus près de l'utilisateur;

vi- à partir du graphe orienté acyclique actualisé (DAG') et du noeud dispatcheur (Nd) associé à chaque utilisateur, on calcule un sous-graphe associé (DODAG') par utilisateur qui correspond au chemin personnalisé à chaque utilisateur vers un lieu cible donné ("E", "S", "W"),

vii- on guide chaque utilisateur via son objet connecté (T) ou des objets connectés (T') du bâtiment, à suivre son sous-graphe (DODAG') associé, vers un lieu cible donné ("E", "S", "W"), et on réitère les étapes précédentes ii à vi, pour actualiser le guidage spatialement et temporellement, à une fréquence temporelle donnée et adaptée à l'évènement.

2. Procédé selon la revendication précédente, dans lequel dans l'étape vi, on calcule pour chaque utilisateur, un sous-graphe (DODAG') associé qui correspond au chemin personnalisé à chaque utilisateur vers un lieu cible donné ("E", "S", "W"), à l'aide :

- d'une «fonction objectif individuelle» pour chaque noeud dispatcheur (Nd), basée sur des profils des utilisateurs, et qui présente comme paramètres d'entrée un temps et/ou une distance de parcours des utilisateurs vers le ou les lieux cibles ("E", "S", "W"), pour :

• attribuer à chaque utilisateur tous ses noeuds de passage (N) associés au noeud dispatcheur (Nd), à proximité duquel se trouve chaque utilisateur,
• constituer des listes d'attente de chaque noeud de passage (N) associé au noeud dispatcheur (Nd),
• constituer des listes d'attente de chaque noeud de passage (N) de l'ensemble du bâtiment,

- d'une «fonction objectif générale» à partir des «fonctions objectif individuelles», qui présente en entrée les listes d'attente de l'ensemble de chaque noeuds de passage (N) de l'ensemble du bâtiment, et en sortie les sous-graphes (DODAG') associés de tous les utilisateurs calculés pour réduire le temps et/ou la distance de parcours de tous les utilisateurs.

3. Procédé selon la revendication précédente, dans lequel la «fonction objectif individuelle» est choisie parmi la liste suivante :

- linéaire ;
- MRHOF ;
- ETXOF;
- stratégie min max ;
- logique floue.

4. Procédé selon l'une des revendications 2 ou 3, dans lequel les profils des utilisateurs comportent les informations suivantes, en vue de calculer le DODAG' personnalisé :

- Personne à Mobilité Réduite ;
- l'âge de l'utilisateur;
- présence d'autres utilisateurs spécifiques ;
- profils différenciés.

5. Procédé selon l'une des revendications précédentes, dans lequel l'événement est une urgence et le procédé permet d'évacuer les utilisateurs vers les lieux cibles ("E", "S", "W") qui sont des sorties du bâtiment.

6. Procédé selon l'une des revendications précédentes, dans lequel l'événement est dit normal et le procédé permet d'acheminer les utilisateurs vers les lieux cibles ("E", "S", "W").

7. Procédé selon l'une des revendications précédentes, dans lequel dans l'étape ii, on détermine la nature de l'événement et sa localisation réelle dans le bâtiment :

   a) automatiquement par des algorithmes et/ou
   b) manuellement par entrée d'informations des utilisateurs qui sont envoyées au serveur de contrôle (S), afin de déterminer, dans le graphe orienté acyclique (DAG), les noeuds (N) les plus proches de l'évènement.

8. Procédé selon l'une des revendications précédentes, dans lequel le bâtiment présente plusieurs étages, et dans l'étape vi on calcule, à partir de chaque noeud de passage (N), un sous-graphe DODAG' dans tous les étages connectés entre eux via les noeuds de passage (N) inter-étages pour constituer le DAG global pour traiter toute position dans le bâtiment.

9. Procédé selon l'une des revendications précédentes, dans lequel dans l'étape ii, dans une étape d'apprentissage, on a mesuré la puissance du signal de réception de l'objet connecté situé à des positions connues dans le bâtiment en fonction de bornes (B) de communication sans fil, et on a déterminé la relation puissance du signal de réception et position dans le bâtiment.

10. Procédé selon l'une des revendications précédentes, dans lequel les interfaces/signaux personnalisés de l'étape vii sont :

    - des images sur écran,
    - par réalité virtuelle et augmentée, et/ou
    - indication sonore, vibrations directionnelles sur bracelets ou cannes, guidage par agent ou signaux lumineux, drones.

11. Procédé selon l'une des revendications précédentes, dans lequel les interfaces/signaux personnalisés de l'étape vii sont réalisés sur les objets connectés (T) embarqués de chaque utilisateur qui sont destinés à la localisation individualisée et au guidage individualisé de chaque utilisateur.

12. Dispositif de localisation d'utilisateurs et de guidage des déplacements des utilisateurs dans un bâtiment qui présente des espaces fermés délimités par des obstacles,
    ledit guidage étant réalisé en fonction d'un évènement dans le bâtiment, suivant des chemins menant vers un ou plusieurs lieux cibles donnés ("E", "S", "W"),
    le guidage étant adapté à chaque utilisateur,
    qui présente :

    - un serveur des ressources à distance qui est un serveur de contrôle (S) accessible par un réseau de communication ;
    - des capteurs (C) reliés au serveur de contrôle (S) pour détecter un événement, et sa localisation réelle dans le bâtiment, que l'on stocke sur le serveur de contrôle (S) ;
    - au moins une borne (B) de communication en liaison de communication avec le serveur de contrôle (S),
    - des objets connectés (T) des utilisateurs, en liaison de communication sans fil avec le serveur de contrôle (S) par la ou les bornes (B) de communication,
    - des moyens de calcul (M) reliés au serveur de contrôle (S) qui :

      i- à partir d'une maquette numérique du bâtiment (BIM, CIM),

        - calculent des noeuds (N) se répartissant entre : des noeuds dispatcheurs ($N_d$) ; et des noeuds de passage, les noeuds de passage étant des points du chemin devant être empruntés par les utilisateurs pour se déplacer vers le ou les divers lieux cibles donnés ("E", "S", "W") ;
        - calculent des arêtes (A), chaque arête reliant deux noeuds (N) successifs en traversant les espaces sans rencontrer les obstacles ;

- calculent automatiquement un graphe orienté acyclique (DAG) de déplacement vers les lieux cibles, constitué avec les noeuds (N, Nd) et les arêtes (A),

ii+iii- calculent la position réelle de chaque utilisateur situé dans le bâtiment, avec pour les espaces fermés une mesure de la puissance du signal de réception de l'objet connecté donné de l'utilisateur, réalisée par une liaison de communication sans fil à une ou plusieurs bornes (B) d'accès de communication, la ou les bornes (B) d'accès ayant une position identifiée dans la maquette numérique du bâtiment (BIM, CIM) ;
iv- calculent le graphe orienté acyclique dit 'actualisé' (DAG') de déplacement vers les lieux cibles en fonction d'une nature de l'événement qui entrainent l'inaccessibilité de certains noeuds du graphe orienté acyclique (DAG) ;
v- transposent les positions réelles des utilisateurs dans la maquette numérique et calculent le noeud dispatcheur ($N_d$) associé à chaque utilisateur et situé le plus près de l'utilisateur;
vi- à partir du graphe orienté acyclique actualisé, et du noeud dispatcheur (Nd) associé à chaque utilisateur, calculent pour chaque utilisateur un sous-graphe associé (DODAG') qui correspond à un chemin personnalisé à chaque utilisateur vers un lieu cible donné ("E", "S", "W"),
vii- réitèrent les étapes suivantes ii à vi, pour actualiser spatialement et temporellement le guidage, à une fréquence temporelle donnée et adaptée à l'évènement,

- les objets connectés (T) des utilisateurs ou des objets connectés (T') localisés dans le bâtiment, guidant chaque utilisateur à suivre son sous-graphe (DODAG') associé, vers un lieu cible donné ("E", "S", "W").

**13.** Dispositif (D) selon la revendication précédente, dans lequel dans l'étape vi, à partir de chaque noeud N du graphe orienté acyclique actualisé, les moyens de calcul (M) calculent pour chaque utilisateur un sous-graphe (DODAG') qui correspond au chemin personnalisé à chaque utilisateur vers un lieu cible donné ("E", "S", "W"), à l'aide :

- d'une «fonction objectif individuelle» pour chaque noeud dispatcheur (Nd), basée sur des profils des utilisateurs, et qui présente comme paramètres d'entrée un temps et/ou une distance de parcours des utilisateurs vers le ou les lieux cibles ("E", "S", "W"), pour :

  • attribuer à chaque utilisateur tous ses noeuds de passage associés au noeud dispatcheur (Nd), à proximité duquel se trouve chaque utilisateur,
  • constituer des listes d'attente de chaque noeud de passage (N) associé au noeud dispatcheur (Nd),
  • constituer des listes d'attente de chaque noeud de passage (N) de l'ensemble du bâtiment,

- d'une «fonction objectif générale» à partir des «fonctions objectif individuelles», qui présente en entrée les listes d'attente de l'ensemble de chaque noeuds de passage (N) de l'ensemble du bâtiment, et en sortie les sous-graphes (DODAG') de tous les utilisateurs calculés pour réduire le temps et/ou la distance de parcours de tous les utilisateurs.

**14.** Dispositif (D) selon la revendication précédente, dans lequel la «fonction objectif individuelle» est choisie parmi la liste suivante :

- linéaire ;
- MRHOF ;
- ETXOF ;
- stratégie min max ;
- logique floue.

**15.** Dispositif (D) selon l'une des revendications 12 à 14, dans lequel :

- les noeuds dispatcheurs ($N_d$) sont des points centroïdes dans un espace comprenant une salle, hall, couloir;
- les noeuds de passage (N) sont des portes, entrées et sorties d'ascenseur, points hauts et bas de rampes ou d'escaliers

**16.** Dispositif (D) selon l'une des revendications 12 à 15, dans lequel les moyens de calcul (M) déterminent automatiquement ou semi-automatiquement la nature de l'évènement.

**17.** Dispositif (D) selon l'une des revendications 12 à 16, dans lequel les objets connectés (T, T') sont choisis parmi la liste suivante :

- Smartphone,
- Canne connectée,
- Fauteuil roulant connecté,
- Tablette,
- Ecran connecté,
- Lunette connectée,
- Bracelet connecté,
- Capteur connecté lumineux,
- Dispositifs de communication pour les agents de sécurité/d'évacuation,
- Robot connecté,
- Drone connecté.

**18.** Dispositif (D) selon l'une des revendications 12 à 17, dans lequel les bornes (B) de communication sans fil sont fixes et/ou mobiles, et sont des bornes (B) de communication Wifi.

EP 3 800 621 A1

**Maquette 3D** → **Générateur graphe d'évacuation (DAG)** → **Graphe d'évacuation (DAG)**

IFC → Extraction des étages → Extraction des espaces → Espace → Extraction des sommets → Génération Des Centroïdes

Espace → Extraction des limites → Portes

Espace → Extraction du contenu spatial → Escaliers / Ascenseurs

FIG. 1

Maquette numérique

Générateur graphe d'évacuation (DAG)

Graphe d'évacuation (DAG)

Calcul du DODAG chemin optimal ou adapté et personnalisé

Calcul de la position des utilisateurs dans le bâtiment « Localisation Indoor »

FIG. 2

EP 3 800 621 A1

Graphe d'évacuation (DAG)

Calcul de la position des utilisateurs dans le bâtiment « Localisation Indoor »

Détection d'évenement et qualification (incendie, explosion, etc) ou confort « Scénario d'évacuation »

Profil de l'utilisateur PMR, mal voyant, ...

Calcul du DODAG chemin optimal ou adapté et personnalisé

FIG. 3

- – · – · → DOGAG extrait à partir de la fonction objectif 1

———→ DOGAG extrait à partir de la fonction objectif 2

Ce noeud appartient à deux DODAG différent 1 et 2

FIG. 4

EP 3 800 621 A1

EP 3 800 621 A1

**Apprentissage**

**Localisation**

Hors ligne

En ligne

Etude de site

Estimation de l'emplacement

(Emplacement, Empreinte digitale)

Mesure du signal

Base de données d'empreintes digitales

Algorithme de localisation

FIG. 5a

Vecteur de puissance de signal avec les bornes

| -60 | -85 | -98 |

| -50 | -63 | -68 |

● Point de référence (PR)     ◆ Utilisateur

FIG. 5b

FIG. 6

FIG. 7a

FIG. 7b

RDC

R+1

FIG. 7c

**FIG. 7d**

EP 3 800 621 A1

FIG. 8

FIG. 9

**FIG. 10**

FIG. 11

EP 3 800 621 A1

FIG. 12

FIG. 13

EP 3 800 621 A1

FIG. 14

EP 3 800 621 A1

FIG. 15

FIG. 16

FIG. 17

FIG. 18a

FIG. 18b

FIG. 19a

FIG. 19b

FIG. 19c

FIG. 20

FIG. 21

EP 3 800 621 A1

FIG. 22

EP 3 800 621 A1

FIG. 23

FIG. 24

FIG. 25

FIG. 26

Etape=1

FIG. 27

Etape=13

FIG. 28

FIG. 29

Etape=1

FIG. 30

Etape=2

FIG. 31

FIG. 32

Europäisches
Patentamt

European
Patent Office

Office européen
des brevets

**RAPPORT DE RECHERCHE EUROPEENNE**

Numéro de la demande

EP 19 30 6270

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | DE 10 2011 083023 A1 (BOSCH GMBH ROBERT [DE]) 21 mars 2013 (2013-03-21) | 1,5-12, 15-18 | INV. G08B7/06 |
| A | * abrégé; figures 2, 6a, 6b * <br> * alinéa [0005] - alinéa [0012] * <br> * alinéa [0019] - alinéa [0020] * <br> * alinéa [0027] - alinéa [0028] * <br> * alinéa [0035] * <br> ----- | 2-4,13, 14 | G08B29/18 |
| Y | US 9 898 912 B1 (JORDAN II JACKIE O [US] ET AL) 20 février 2018 (2018-02-20) | 1,5-12, 15-18 | |
| A | * abrégé; figures 1-6 * <br> * colonne 1, ligne 55 - colonne 3, ligne 23 * <br> * colonne 4, ligne 23 - ligne 26 * <br> * colonne 4, ligne 35 - ligne 38 * <br> * colonne 5, ligne 29 - ligne 41 * <br> ----- | 2-4,13, 14 | |

**DOMAINES TECHNIQUES RECHERCHES (IPC)**

G08B
G01S
G06Q
G06K

Le présent rapport a été établi pour toutes les revendications

| Lieu de la recherche | Date d'achèvement de la recherche | Examinateur |
|---|---|---|
| Munich | 27 mars 2020 | Bilard, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 30 6270

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2020

| Document brevet cité au rapport de recherche | Date de publication | Membre(s) de la famille de brevet(s) | Date de publication |
|---|---|---|---|
| DE 102011083023 A1 | 21-03-2013 | DE 102011083023 A1<br>WO 2013041477 A1 | 21-03-2013<br>28-03-2013 |
| US 9898912 B1 | 20-02-2018 | US 9898912 B1<br>US 10249158 B1<br>US 10282788 B1<br>US 10282961 B1<br>US 10346811 B1<br>US 10353359 B1<br>US 10356303 B1<br>US 10388135 B1<br>US 10515372 B1<br>US 10522009 B1<br>US 10573146 B1<br>US 10573149 B1 | 20-02-2018<br>02-04-2019<br>07-05-2019<br>07-05-2019<br>09-07-2019<br>16-07-2019<br>16-07-2019<br>20-08-2019<br>24-12-2019<br>31-12-2019<br>25-02-2020<br>25-02-2020 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Omprakash Gnawali and Philip Levis. The Minimum Rank with Hysteresis Objective Function. RFC 6719. 2012
- **OMPRAKASH GNAWALI ; PHILIP LEVIS.** The ETX Objective Function for RPL, draft-gnawali-roll-etx-of-00. IETF, 2010
- **C. JORGENSEN ; S. POWELL.** Solving 0-1 Minimax Problems. *The Journal of the Operational Research Society,* Juin 1987, vol. 38 (6), 515-522
- **WANG, A. KLASER ; C. SCHMID ; C.-L. LIU.** Action recognition by dense trajectories. *Computer Vision and Pattern Recognition (CVPR), 2011 IEEE Conference on,* Juin 2011, 3169-3176
- **S. COSAR ; G. DONATIELLO ; V. BOGORNY ; C. GARATE ; L. ALVARES ; F. BREMOND.** Towards Abnormal Trajectory and Event Détection in Video Surveillance. *IEEE Transactions on Circuits and Systems for Video Technology,* 2016
- **E. CETIN ; K. DIMITROPOULOS ; B. GOUVERNEUR ; N. GRAMMALIDIS ; O. GUNAY ; Y. H. HABIBOGLU ; B. U. TOREYIN ; S. VERSTOCKT.** Video fire detection: a review. *Digital Signal Processing,* 2013, vol. 23 (6), 1827-1843
- **J. FONOLLOSA ; A. SOLÓRZANO ; S. MARCO.** A partir des capteurs C renifleurs. *Chemical Sensor Systems and Associated Algorithms for Fire Detection: A Review, Sensors,* 2018, vol. 18